(19) Europäisches Patentamt
European Patent Office
Office européen des brevets

(11) **EP 4 322 056 A1**

(12) **EUROPEAN PATENT APPLICATION**
published in accordance with Art. 153(4) EPC

(43) Date of publication:
**14.02.2024 Bulletin 2024/07**

(51) International Patent Classification (IPC):
**G06N 3/04** *(2023.01)*    **G06N 3/08** *(2023.01)*

(21) Application number: **22794895.7**

(86) International application number:
**PCT/CN2022/089247**

(22) Date of filing: **26.04.2022**

(87) International publication number:
**WO 2022/228425 (03.11.2022 Gazette 2022/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.04.2021 CN 202110475677**

(71) Applicant: **Huawei Technologies Co., Ltd.**
**Shenzhen, Guangdong 518129 (CN)**

(72) Inventors:
• **ZHANG, Zhiyuan**
**Beijing 100871 (CN)**

• **REN, Xuancheng**
**Beijing 100871 (CN)**
• **SUN, Xu**
**Beijing 100871 (CN)**
• **HE, Bin**
**Shenzhen, Guangdong 518129 (CN)**
• **QIAN, Li**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **MODEL TRAINING METHOD AND APPARATUS**

(57) This application discloses a model training method, which may be applied to the field of artificial intelligence. The method includes: when training a first neural network model based on a training sample, determining N parameters from M parameters of the first neural network model based on a capability of affecting data processing precision by each parameter; and updating the N parameters. In this application, on a premise that it is ensured that the data processing precision of the model meets a precision requirement, because only N parameters in M parameters in an updated first neural network model are updated, an amount of data transmitted from a training device to a terminal device can be reduced.

Obtain a first neural network model and a training sample, where the first neural network model includes M parameters — 301

Train the first neural network model based on the training sample to update N parameters in the M parameters, until data processing precision of the first neural network model meets a preset condition, to obtain a second neural network model, where N is a positive integer less than M, and the N parameters are determined based on a capability of affecting the data processing precision by each of the M parameters — 302

FIG. 3

## Description

This application claims priority to Chinese Patent Application No. 202110475677.0, filed with the China National Intellectual Property Administration on April 29, 2021 and entitled "MODEL TRAINING METHOD AND APPARATUS", which is incorporated herein by reference in its entirety.

## TECHNICAL FIELD

This application relates to the field of artificial intelligence, and in particular, to a model training method and apparatus.

## BACKGROUND

Artificial intelligence (artificial intelligence, AI) is a theory, a method, a technology, or an application system that simulates, extends, and expands human intelligence by using a digital computer or a machine controlled by a digital computer, to perceive an environment, obtain knowledge, and achieve an optimal result based on the knowledge. In other words, artificial intelligence is a branch of computer science, and is intended to understand the essence of intelligence and produce a new intelligent machine that can react in a manner similar to human intelligence. Artificial intelligence is to study design principles and implementation methods of various intelligent machines, so that the machines have perception, inference, and decision-making functions.

In recent years, neural networks have achieved superior performance in a series of machine learning tasks, and may specifically be used in a plurality of fields such as images, languages, speech, and videos. A server may obtain a pre-trained model through training (or a model obtained by performing at least one time of fine-tuning and updating on the pre-trained model. For ease of description, in embodiments, the pre-trained model and a model obtained by performing the at least one time of fine-tuning (fine-tuning) on the pre-trained model are referred to as first neural network models or to-be-updated neural network models), and the first neural network model is deployed on a model user such as a terminal device. However, in some scenarios, the first neural network model may need to be updated due to a security problem or a requirement change. For example, the first neural network model is used to implement a translation task. When it is found that a specific translation error exists in the first neural network model, the first neural network model needs to be corrected. For another example, the first neural network model is used to implement a facial recognition task. When it is found that the first neural network model incorrectly recognizes a face of a specific person, the first neural network model needs to be corrected. In addition, model fine-tuning may alternatively be performed on the first neural network model based on private data of the model user.

However, a quantity of parameters of the neural network is large, and all parameters need to be modified during fine-tuning. Therefore, a data amount of patches or update packages delivered by a training device is large.

## SUMMARY

According to a first aspect, this application provides a model training method. The method includes: obtaining a first neural network model and a training sample, where the first neural network model includes M parameters.

The first neural network model may include the M parameters, and the M parameters may be all or some parameters that need to be updated in the first neural network model. It should be understood that the M parameters may be parameters whose proportion exceeds 90 percent of all the parameters that need to be updated in the first neural network model.

It should be understood that, in addition to the M parameters, the first neural network model may further include other parameters that may need to be updated. Even though these parameters have a small impact on data processing precision of the first neural network model for a target task, these parameters may still be updated during model training. Optionally, a proportion of these parameters in the first neural network model is small.

The method includes: training the first neural network model based on the training sample to update N parameters in the M parameters, until the data processing precision of the first neural network model meets a preset condition, to obtain a second neural network model, where N is a positive integer less than M, and the N parameters are determined based on a capability of affecting the data processing precision by each of the M parameters.

From a perspective of a model inference side, only a few parameters in the neural network model play an important role in the to-be-implemented target task. When values of these parameters are changed or removed from the neural network model, the data processing precision of the neural network model for the target task is greatly reduced.

From a perspective of a model training side, for the to-be-implemented target task, only a few parameters in the neural network model need to be updated in a large amplitude (or referred to as a large numerical variation), only a few parameters in the neural network model have large update gradients, or only a few parameters in the neural network model have large contribution capabilities of reducing a loss function used for model training.

It should be understood that the foregoing numerical variation may be understood as a numerical change amplitude of the parameter in one iterative training process in a training process, or is determined by combining numerical change amplitudes of the parameter in a plurality of iterative training processes in a training process, or a numerical change amplitude of the parameter relative to a value before training after model training convergence.

It should be understood that the update gradient may be understood as an update gradient of the parameter in the one iterative training process in the training process, or is determined by combining update gradients of the parameter in the plurality of iterative training processes in the training process.

It should be understood that the foregoing contribution capability of reducing the loss function used for model training by the parameter may be understood as a contribution capability of reducing the loss function used for model training by the parameter in the one iterative training process in the training process, or is determined by combining contribution capabilities for reducing the loss function used for model training by the parameter in the plurality of iterative training processes in the training process. For example, the foregoing contribution capability of reducing the loss function used for model training by the parameter may be represented by using a loss change allocation (loss change allocation, LCA) indicator.

In this embodiment of this application, on a premise that it is ensured that the data processing precision of the model meets a precision requirement, because only N parameters in M parameters in an updated first neural network model are updated, an amount of data transmitted from a training device to a terminal device can be reduced. In addition, when the first neural network model is a pre-trained model that has some basic functions in the field, or is a model that is obtained by performing fine-tuning on the pre-trained model and that has other functions than the foregoing basic functions, because only a few parameters in the first neural network model are updated in this embodiment of this application, it can be ensured that the first neural network model does not lose an original capability, in other words, it can be ensured that an original task processing capability of the first neural network model does not decrease or does not decrease greatly. In other words, it is ensured that catastrophic forgetting does not occur in the first neural network model (consistency (consistency) is used to quantify that the first neural network model has the original capability in the following embodiment).

In a possible implementation, in the second neural network model, parameters other than the N parameters in the M parameters are not updated.

In a possible implementation, the N parameters are N parameters that most affect the data processing precision of the first neural network model in the M parameters; or
the N parameters are N parameters whose capabilities of affecting the data processing precision of the first neural network model are greater than a threshold in the M parameters.

In a possible implementation, a proportion of N to M is less than 10%.

It should be understood that a quantity of N may be small. In an implementation, the proportion of N to M is less than 10%. For different tasks, quantities of N may be different. For example, for an image classification task, the proportion of N to M may be less than 1 per thousand.

In a possible implementation, before the updating N parameters in the M parameters based on the training sample, the method further includes:
receiving a model update indication sent by the terminal device, where the model update indication indicates to update the N parameters in the first neural network model, or the model update indication indicates to update a target proportion of parameters in the first neural network model.

In a possible implementation, N may be specified by the terminal device on which the first neural network model is deployed.

For example, before model training is performed on the first neural network model, a user may select a quantity of parameters that need to be updated in the first neural network model. The user may send, to the training device by using the terminal device, the quantity of parameters that need to be updated or a proportion of parameters, so that the training device may select the N parameters from the M parameters.

Specifically, from a perspective of the training device, the model update indication sent by the terminal device may be received, where the model update indication indicates to update the N parameters in the first neural network model, or the model update indication indicates to update the target proportion of parameters in the first neural network model, where a product of the M parameters in the first neural network model and the target proportion is N.

In a possible implementation, the second neural network model includes N updated parameters; and after the obtaining a second neural network model, the method further includes:

obtaining model update information, where the model update information includes a numerical variation of each of the M parameters in the second neural network model relative to a value before update;
compressing the model update information to obtain the compressed model update information, where optionally, the compression may be used to perform de-redundancy on a value 0; and

sending the compressed model update information to the terminal device.

In this embodiment of this application, because only the N parameters in the M parameters in the second neural network model are updated, the numerical variations of the N parameters are not 0, and numerical variations of the parameters other than the N parameters in the M parameters are 0. To reduce the amount of the data transmitted from the training device to the terminal device, a data amount of the model update information needs to be reduced. In an implementation, the model update information may be generated based on numerical variations of all the parameters. Because numerical variations of most parameters in the numerical variations of all the parameters are 0, an existing mainstream data compression algorithm may be used to perform de-redundancy on the value 0. Therefore, a data amount of the compressed model update information is small.

Specifically, the model update information may be obtained, where the model update information includes a numerical variation of each of the M parameters in the second neural network model. The model update information may be compressed to obtain the compressed model update information, where the compression is used to perform de-redundancy on the value 0. The compressed model update information is sent to the terminal device. After receiving the compressed model update information, the terminal device may decompress the compressed model update information to obtain the numerical variation of each of the M parameters.

In a possible implementation, after the obtaining a second neural network model, the method further includes: sending model update information to the terminal device, where the model update information includes N updated parameters, and the model update information does not include the parameters other than the N parameters in the M parameters.

To reduce a data amount of the model update information, in another implementation, the model update information may be generated based on the N parameters (which may be update results or the numerical variations of the N parameters). Because N is small, a data amount of the compressed model update information is small.

Specifically, the model update information may be sent to the terminal device, where the model update information includes the N updated parameters, and the model update information does not include the parameters other than the N parameters in the M parameters.

In a possible implementation, the training sample is related to a target task, the data processing precision is data processing precision of the first neural network model for the target task, and the capability of affecting the data processing precision by each parameter is positively correlated with at least one of the following information:

an update gradient corresponding to each parameter when the first neural network model is trained for the target task;
the numerical variation corresponding to each parameter when the first neural network model is trained for the target task; or
a contribution capability of reducing a loss function by each parameter when the first neural network model is trained for the target task, where the loss function is a loss function used when the M parameters are updated.

In a possible implementation, before the training the first neural network model based on the training sample to update N parameters in the M parameters, the method further includes:

training the first neural network model based on the training sample to update the M parameters, and determining the capability of affecting the data processing precision by each of the M parameters; and
determining the N parameters from the M parameters based on the capability of affecting the data processing precision by each of the M parameters. In an implementation, the M parameters in the first neural network model may be first updated, to obtain a reference model through training (which may also be referred to as a third neural network model in this embodiment). Then, parameters that contribute more to the training are determined based on the reference model. The determined parameters may be considered as the foregoing N parameters that have a large impact on the data processing precision of the first neural network model for the target task.

Further, the first neural network model may be re-trained based on the training sample, to update the N parameters in the M parameters. In addition, when the first neural network model is re-trained, the parameters other than the N parameters in the M parameters are not updated.

After the N parameters are determined based on the foregoing reference model, these important parameters (the N parameters) may be selected for training, and only these parameters are trained to achieve sparse parameter updating. Specifically, the first neural network model may be trained based on the training sample, to update the N parameters in the M parameters. In addition, when the first neural network model is trained, the parameters other than the N parameters in the M parameters are not updated.

In a possible implementation, the training the first neural network model based on the training sample to update N parameters in the M parameters includes:

training the first neural network model based on the training sample to update the M parameters, and determining the capability of affecting the data processing precision by each of the M parameters; determining the N parameters from the M parameters based on the capability of affecting the data processing precision by each of the M parameters; and restoring values of the parameters other than the N parameters in M updated parameters to values of corresponding parameters in the first neural network model.

Specifically, the first neural network model may be trained based on the training sample to update the M parameters, where the capability of affecting the data processing precision by each of the M parameters is positively correlated with at least one of the following information:

the update gradient corresponding to each parameter in a process of training the first neural network model; the numerical variation corresponding to each parameter in a process of training the first neural network model; or the contribution capability of reducing the loss function by each parameter in a process of training the first neural network model, where the loss function is a loss function used when the first neural network model is trained.

In an implementation, in a process of updating the M parameters, it may be determined updates of which parameters in the M parameters are to be retained (or referred to as effective updates) and updates of which parameters are not to be retained (or referred to as ineffective updates, or it is described as that the values of the corresponding parameters in the first neural network model are restored, in other words, the parameter values before training are still retained). Specifically, the first neural network model may be trained based on the training sample, to update the N parameters in the M parameters. In addition, in the process of training the first neural network model based on the training sample, it is determined, based on the capability of affecting the data processing precision of the first neural network model by each parameter for the target task, updates of which parameters (the N parameters) are retained.

For example, when the first neural network model is initially trained, all the parameters (for example, the foregoing M parameters) in the first neural network model may be added to an updatable parameter set. When the first neural network model is trained, all the parameters in the updatable parameter set are updated. After model training of a specific quantity of steps is performed, importance (namely, the capability of affecting the data processing accuracy of the first neural network model by the parameter for the target task) of each parameter in the updatable parameter set for model updating may be calculated based on a model training process of the quantity of steps. An indicator for measuring importance of the parameters may be update gradients or change amplitudes of different parameters in the training process. Then, values of a specific proportion of unimportant parameters are restored to original parameter values (in other words, updates of these parameters do not take effect), and the parameters are removed from the updatable parameter set. The foregoing process is repeated, so that the N parameters may be selected. In addition, in the process of training the first neural network model, updates of the N parameters are retained. In addition, although the parameters other than the N parameters in the M parameters may be updated in the training process, updates are not retained.

In a possible implementation, the training the first neural network model based on the training sample to update N parameters in the M parameters includes:

training the first neural network model based on the training sample by using a preset loss function, to update the N parameters in the M parameters, where the preset loss function includes a target loss term, and the target loss term is used to restrict update amplitudes of the parameters.

Optionally, in an implementation, a numerical variation of a parameter when the parameter is updated may indicate a capability of affecting the data processing precision of the model by the parameter, and a regular term (which may be referred to as the target loss term in embodiments of this application) may be added to the loss function used during training of the first neural network model. The regular term may restrict update amplitudes of the parameters. After each iteration or iterative training of a specific quantity of steps, an update of a parameter whose numerical variation is greater than a threshold during the update is retained, and an update of a parameter whose numerical variation is less than the threshold during the update is not retained. In addition, because the regular term used to restrict the update amplitudes of the parameters exists in the loss function, an update amplitude of a parameter with a small capability of affecting the data processing precision of the model may be reduced, so that updates for these parameters (the M-N parameters) are not retained, and only the updates of the N parameters are retained.

In a possible implementation, the training sample is text data, image data, or audio data.

In a possible implementation, the second neural network model is configured to process to-be-processed data to obtain a data processing result, where the to-be-processed data is text data, image data, or audio data.

According to a second aspect, an embodiment of this application provides a parameter configuration method during model updating. The method includes:

displaying a configuration interface, where the configuration interface includes a first control, and the first control indicates a user to enter a quantity or proportion of parameters that need to be updated in a first neural network model; obtaining a target quantity or a target proportion that is entered by the user by using the first control; and sending a model update indication to a server, where the model update indication includes the target quantity or the target proportion, and the target quantity or the target proportion indicates to update the target quantity or target proportion of parameters in the first neural network model during training of the first neural network model.

In a possible implementation, after the sending a model update indication to a server, the method further includes:

receiving compressed model update information sent by the server, and decompressing the compressed model update information to obtain the model update information, where
the model update information includes a plurality of parameters; the plurality of parameters are obtained by updating the target quantity or target proportion of parameters; and a difference between a quantity of parameters included in the model update information and the target quantity falls within a preset range, or a proportion of a quantity of parameters included in the model update information to a quantity of parameters included in the first neural network model and the target proportion fall within a preset range.

In a possible implementation, after the sending a model update indication to a server, the method further includes:

receiving compressed model update information sent by the server, and decompressing the compressed model update information to obtain the model update information, where
the model update information includes numerical variations of a plurality of parameters, and the numerical variations of the plurality of parameters are numerical variations obtained by updating the plurality of parameters in the first neural network model.

According to a third aspect, an embodiment of this application provides a model training apparatus. The apparatus includes:

an obtaining module, configured to obtain a first neural network model and a training sample, where the first neural network model includes M parameters; and
a model update module, configured to train the first neural network model based on the training sample to update N parameters in the M parameters, until data processing precision of the first neural network model meets a preset condition, to obtain a second neural network model, where N is a positive integer less than M, and the N parameters are determined based on a capability of affecting the data processing precision by each of the M parameters.

In a possible implementation, in the second neural network model, parameters other than the N parameters in the M parameters are not updated.

In a possible implementation, the N parameters are N parameters that most affect the data processing precision of the first neural network model in the M parameters; or
the N parameters are N parameters whose capabilities of affecting the data processing precision of the first neural network model are greater than a threshold in the M parameters.

In a possible implementation, a proportion of N to M is less than 10%.

In a possible implementation, the apparatus further includes a receiving module, configured to: before the first neural network model is trained based on the training sample to update the N parameters in the M parameters, receive a model update indication sent by a terminal device, where the model update indication indicates to update the N parameters in the first neural network model, or the model update indication indicates to update a target proportion of parameters in the first neural network model.

In a possible implementation, the second neural network model includes N updated parameters, and the obtaining module is further configured to:

after the second neural network model is obtained, obtain model update information, where the model update information includes a numerical variation of each of the M parameters in the second neural network model relative to a value before update; and
the apparatus further includes:

a compression module, configured to compress the model update information to obtain the compressed model update information; and
a sending module, configured to send the compressed model update information to the terminal device.

In a possible implementation, the sending module is configured to: after the second neural network model is obtained, send the model update information to the terminal device, where the model update information includes the N updated parameters, and the model update information does not include the parameters other than the N parameters in the M parameters.

In a possible implementation, the training sample is related to a target task, the data processing precision is data processing precision of the first neural network model for the target task, and the capability of affecting the data processing precision by each parameter is positively correlated with at least one of the following information:

an update gradient corresponding to each parameter when the first neural network model is trained for the target task;

the numerical variation corresponding to each parameter when the first neural network model is trained for the target task; or

a contribution capability of reducing a loss function by each parameter when the first neural network model is trained for the target task, where the loss function is a loss function used when the M parameters are updated.

In a possible implementation, the model update module is further configured to: before training the first neural network model based on the training sample to update the N parameters in the M parameters, train the first neural network model based on the training sample to update the M parameters, and determine the capability of affecting the data processing precision by each of the M parameters; and determine the N parameters from the M parameters based on the capability of affecting the data processing precision by each of the M parameters.

In a possible implementation, the model update module is specifically configured to: train the first neural network model based on the training sample to update the M parameters; and determine the capability of affecting the data processing precision by each of the M parameters;

determine the N parameters from the M parameters based on the capability of affecting the data processing precision by each of the M parameters; and

restore values of the parameters other than the N parameters in M updated parameters to values of corresponding parameters in the first neural network model.

In a possible implementation, the model update module is specifically configured to train the first neural network model based on the training sample to update the N parameters in the M parameters; and

the training the first neural network model for the target task includes:

training the first neural network model based on the training sample.

In a possible implementation, the model update module is specifically configured to train the first neural network model based on the training sample by using a preset loss function, to update the N parameters in the M parameters, where the preset loss function includes a target loss term, and the target loss term is used to restrict update amplitudes of the parameters.

In a possible implementation, the training sample is text data, image data, or audio data.

In a possible implementation, the second neural network model is configured to process to-be-processed data to obtain a data processing result, where the to-be-processed data is text data, image data, or audio data.

According to a fourth aspect, this application provides a parameter configuration apparatus during model updating. The apparatus includes:

a display module, configured to display a configuration interface, where the configuration interface includes a first control, and the first control indicates a user to enter a quantity or proportion of parameters that need to be updated in a first neural network model;

an obtaining module, configured to obtain a target quantity or a target proportion that is entered by the user by using the first control; and

a sending module, configured to send a model update indication to a server, where the model update indication includes the target quantity or the target proportion, and the target quantity or the target proportion indicates to update the target quantity or target proportion of parameters in the first neural network model during training of the first neural network model.

In a possible implementation, the apparatus further includes a receiving module, configured to: after the model update indication is sent to the server, receive compressed model update information sent by the server, and decompress the compressed model update information to obtain the model update information, where

the model update information includes a plurality of parameters; the plurality of parameters are obtained by updating the target quantity or target proportion of parameters; and a difference between a quantity of parameters included in the model update information and the target quantity falls within a preset range, or a proportion of a quantity of parameters included in the model update information to a quantity of parameters included in the first neural network model and the target proportion fall within a preset range.

In a possible implementation, the receiving module is further configured to: after the model update indication is sent to the server, receive compressed model update information sent by the server, and decompress the compressed model update information to obtain the model update information, where

the model update information includes numerical variations of a plurality of parameters, and the numerical variations of the plurality of parameters are numerical variations obtained by updating the plurality of parameters in the first neural network model.

According to a fifth aspect, an embodiment of this application provides a model training apparatus, which may include a memory, a processor, and a bus system. The memory is configured to store a program, and the processor is configured to execute the program in the memory, to perform the method in any optional implementation of the first aspect.

According to a sixth aspect, an embodiment of this application provides a parameter configuration apparatus during model updating, which may include a memory, a processor, and a bus system. The memory is configured to store a program, and the processor is configured to execute the program in the memory, to perform the method in any optional implementation of the second aspect.

According to a seventh aspect, an embodiment of this application provides a computer-readable storage medium. The computer-readable storage medium stores a computer program. When the computer program is run on a computer, the computer is enabled to perform the method in any optional implementation of the first aspect and the method in any optional implementation of the second aspect.

According to an eighth aspect, an embodiment of this application provides a computer program product, including code. When the code is executed, the computer program product is configured to implement the method in any optional implementation of the first aspect and the method in any optional implementation of the second aspect.

According to a ninth aspect, this application provides a chip system. The chip system includes a processor, configured to support an execution device or a training device in implementing functions in the foregoing aspects, for example, sending or processing data or information in the foregoing methods. In a possible design, the chip system further includes a memory, and the memory is configured to store program instructions and data that are necessary for the execution device or the training device. The chip system may include a chip, or may include a chip and another discrete component.

This embodiment of this application provides the model training method. The method includes: obtaining the first neural network model and the training sample, where the first neural network model includes the M parameters; and training the first neural network model based on the training sample to update the N parameters in the M parameters, until the data processing precision of the first neural network model meets the preset condition, to obtain the second neural network model, where N is a positive integer less than M, and the N parameters are determined based on the capability of affecting the data processing precision by each of the M parameters. In the foregoing manner, on a premise that it is ensured that the data processing precision of the model meets the precision requirement, because only the N parameters in the M parameters in the updated first neural network model are updated, the amount of the data transmitted from the training device to the terminal device can be reduced.

## BRIEF DESCRIPTION OF DRAWINGS

FIG. 1 is a schematic diagram of a structure of an artificial intelligence main framework;
FIG. 2 is a schematic diagram of a system architecture according to an embodiment of this application;
FIG. 3 is a schematic diagram of an embodiment of a model training method according to an embodiment of this application;
FIG. 4 is a schematic diagram of an embodiment of a configuration method during model training according to an embodiment of this application;
FIG. 5 is a schematic diagram of an interaction interface according to an embodiment of this application;
FIG. 6 is a schematic flowchart of updating and delivering a model according to an embodiment of this application;
FIG. 7 is a schematic diagram of a model training apparatus according to an embodiment of this application;
FIG. 8 is a schematic diagram of a configuration apparatus during model training according to an embodiment of this application;
FIG. 9 is a schematic diagram of a structure of an execution device according to an embodiment of this application;
FIG. 10 is a schematic diagram of a structure of a training device according to an embodiment of this application; and
FIG. 11 is a schematic diagram of a structure of a chip according to an embodiment of this application.

## DESCRIPTION OF EMBODIMENTS

The following describes embodiments of the present invention with reference to accompanying drawings in embodiments of the present invention. Terms used in implementations of the present invention are merely intended to explain specific embodiments of the present invention, but not intended to limit the present invention.

The following describes embodiments of this application with reference to the accompanying drawings. A person of ordinary skill in the art may learn that, with development of technologies and emergence of a new scenario, technical solutions provided in embodiments of this application are also applicable to a similar technical problem.

In the specification, claims, and the accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

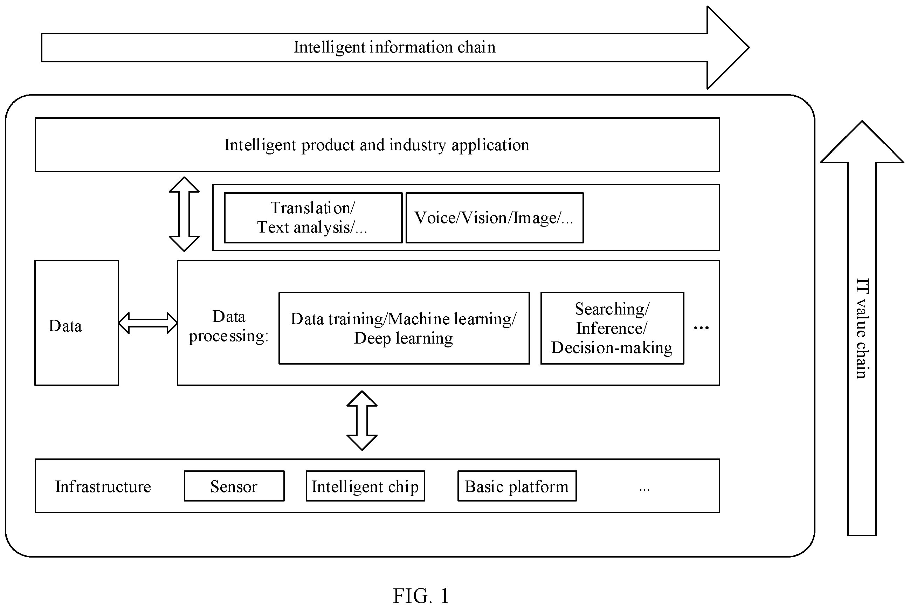

An overall working procedure of an artificial intelligence system is first described. FIG. 1 is a schematic diagram of a structure of an artificial intelligence main framework. The following describes the artificial intelligence main framework from two dimensions: an "intelligent information chain" (horizontal axis) and an "IT value chain" (vertical axis). The "intelligent information chain" indicates a process from data obtaining to data processing. For example, the "intelligent information chain" may be a general process of intelligent information perception, intelligent information representation and formation, intelligent reasoning, intelligent decision-making, and intelligent execution and output. In this process, data undergoes a refining process of "data - information - knowledge - intelligence". The "IT value chain" is an industrial ecological process from underlying infrastructure of artificial intelligence to information (providing and processing technical implementations) to a system, and indicates value brought by artificial intelligence to the information technology industry.

(1) Infrastructure

Infrastructure provides computing capability support for the artificial intelligence system, to communicate with the outside world and implement support by using basic platforms. The infrastructure communicates with the outside by using sensors. A computing capability is provided by intelligent chips (hardware acceleration chips such as a CPU, an NPU, a GPU, an ASIC, and an FPGA). The basic platforms include related platforms, for example, a distributed computing framework and network, for assurance and support. The basic platforms may include a cloud storage and computing network, an interconnection network, and the like. For example, the sensor communicates with the outside to obtain data, and the data is provided for an intelligent chip in a distributed computing system provided by the basic platform to perform computation.

(2) Data

Data at an upper layer of the infrastructure indicates a data source in the field of artificial intelligence. The data relates to graphics, images, speech, and text, and further relates to internet of things data of conventional devices, and includes service data of a conventional system and perception data such as force, displacement, a liquid level, a temperature, and humidity.

(3) Data processing

Data processing usually includes data training, machine learning, deep learning, searching, reasoning, decision-making, and other methods.

The machine learning and the deep learning may be used for performing symbolic and formal intelligent information modeling, extraction, preprocessing, training, and the like on data.

The reasoning is a process of performing machine thinking and solving problems by simulating an intelligent reasoning mode of humans in a computer or intelligent system by using formal information and according to a reasoning control policy. Typical functions are searching and matching.

The decision-making is a process of performing decision-making after performing reasoning on intelligent information, and usually provides classification, sorting, prediction, and other functions.

(4) General capabilities

After data undergoes the foregoing data processing, some general capabilities may be further formed based on a data processing result. For example, the general capabilities may be an algorithm or a general system, for example, translation, text analysis, computer vision processing, speech recognition, and image recognition.

(5) Intelligent product and industry application

The intelligent product and industry application are a product and an application of an artificial intelligence system in various fields, and are package of an overall solution of artificial intelligence, so that decision-making for intelligent information is productized and an application is implemented. Application fields mainly include a smart terminal, smart transportation, smart health care, autonomous driving, a smart city, and the like.

In recent years, neural networks have achieved superior performance in a series of machine learning tasks, and may specifically be used in a plurality of fields such as images, languages, speech, and videos. A server may obtain a pre-trained model through training (or a model obtained by performing at least one time of fine-tuning and updating on the pre-trained model. For ease of description, in embodiments, the pre-trained model and a model obtained by performing the at least one time of fine-tuning (fine-tuning) on the pre-trained model are referred to as first neural network models or to-be-updated neural network models), and the first neural network model is deployed on a model user such as a terminal device. However, in some scenarios, the first neural network model may need to be updated due to a security problem or a requirement change. For example, the first neural network model is used to implement a translation task. When it is found that a specific translation error exists in the first neural network model, the first neural network model needs to be corrected. For another example, the first neural network model is used to implement a facial recognition task. When it is found that the first neural network model incorrectly recognizes a face of a specific person, the first neural network model needs to be corrected. In addition, model fine-tuning may alternatively be performed on the first neural network model based on private data of the model user.

The following describes an application architecture in embodiments of this application.

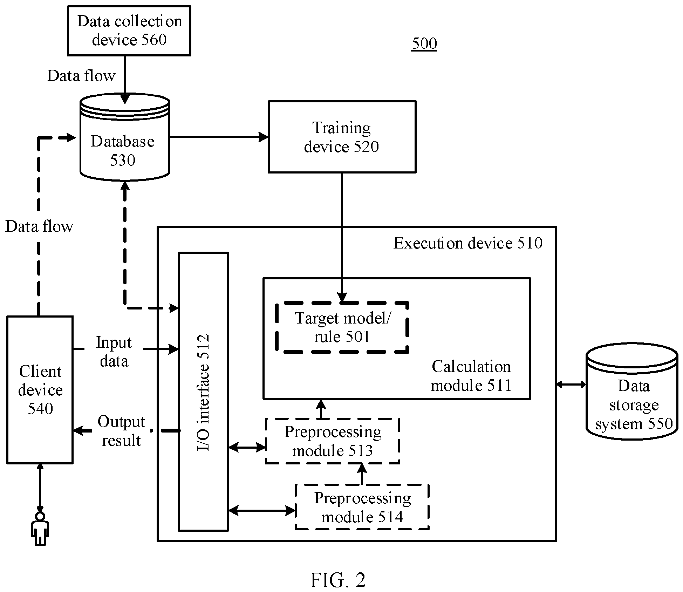

The following describes in detail a system architecture provided in an embodiment of this application with reference to FIG. 2. FIG. 2 is a schematic diagram of the system architecture according to an embodiment of this application. As shown in FIG. 2, a system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The data collection device 560 is configured to collect a training sample. The training sample may be image data, text data, audio data, or the like. In this embodiment of this application, the training sample is data used when a first neural network model is trained. After collecting the training sample, the data collection device 560 stores the training sample in the database 530.

It should be understood that the database 530 may further maintain a pre-trained model such as the first neural network model or a model obtained by performing at least one time of fine-tuning (fine-tuning) on the pre-trained model.

The training device 520 may train the first neural network model based on the training sample maintained in the database 530, to obtain the target model/rule 501. In this embodiment of this application, the target model/rule 501 may be a second neural network model and a third neural network model.

It should be noted that, in actual application, not all training samples maintained in the database 530 are collected by the data collection device 560, and the training sample may alternatively be received from another device. In addition, it should be noted that the training device 520 may not train the target model/rule 501 completely based on the training sample maintained in the database 530, or may perform model training by obtaining the training sample from a cloud or another place. The foregoing description should not be used as a limitation on this embodiment of this application.

Specifically, the training sample may be private data from the client device 540, and then the training device 520 may use the private data from the client device 540 as the training sample to perform model fine-tuning on the first neural network model.

In this embodiment of this application, the training device 520 may train the first neural network model by using a model training method in embodiments of this application, to obtain the second neural network model.

The target model/rule 501 obtained through training by the training device 520 may be applied to different systems or devices, for example, applied to the execution device 510 shown in FIG. 2. The execution device 510 may be a terminal, for example, a mobile phone terminal, a tablet computer, a notebook computer, an augmented reality (augmented reality, AR)/virtual reality (virtual reality, VR) device, or a vehicle-mounted terminal. The execution device 510 may alternatively be a server, a cloud, or the like.

Specifically, the training device 520 may transfer update data of the first neural network model (referred to as model update information in embodiments of this application) to the execution device (the execution device is referred to as a terminal device in embodiments of this application).

In FIG. 2, the execution device 510 is configured with the input/output (input/output, I/O) interface 512, and is configured to exchange data with a peripheral device. A user may input data (for example, to-be-processed data in embodiments of this application) to the I/O interface 512 by using the client device 540.

The preprocessing module 513 and the preprocessing module 514 are configured to preprocess the input data received through the I/O interface 512. It should be understood that there may be no preprocessing module 513 and no preprocessing module 514 or only one preprocessing module. When the preprocessing module 513 and the preprocessing module 514 do not exist, the calculation module 511 may be directly used to process the input data.

When the execution device 510 preprocesses the input data, or when the calculation module 511 of the execution device 510 performs a related processing process such as calculation, the execution device 510 may invoke data, code, and the like in the data storage system 550 for corresponding processing. Alternatively, data, instructions, and the like obtained through corresponding processing may be stored in the data storage system 550.

Finally, the I/O interface 512 presents a processing result to the client device 540, to further provide the processing result for the user.

In the case shown in FIG. 2, the user may manually give the input data, and the "manually given input data" may be operated through an interface provided by the I/O interface 512. In another case, the client device 540 may automatically send the input data to the I/O interface 512. If authorization of the user needs to be obtained when the client device 540 is required to automatically send the input data, the user may set corresponding permission on the client device 540. The user may view, on the client device 540, the result output by the execution device 510. A specific presentation form may be a specific manner such as display, sound, or action. The client device 540 may alternatively serve as a data collection end, collect the input data input to the I/O interface 512 and the output result output from the I/O interface 512 that are shown in the figure as new sample data, and store the new sample data in the database 530. Certainly, collection may alternatively be performed without using the client device 540, but the I/O interface 512 directly stores the input data input to the I/O interface 512 and the output result output from the I/O interface 512 that are shown in the figure in the database 530 as the new sample data.

It should be noted that FIG. 2 is merely a schematic diagram of the system architecture according to an embodiment of this application. Location relationships between devices, components, modules, and the like shown in the figure constitute no limitation. For example, in FIG. 2, the data storage system 550 is an external memory relative to the execution device 510. In other cases, the data storage system 550 may alternatively be placed in the execution device 510. It should be understood that the execution device 510 may be deployed in the client device 540.

In this embodiment of this application, the training device 520 may obtain code stored in a memory (which is not shown in FIG. 2 and may be integrated into the training device 520 or deployed separately from the training device 520), to implement the model training method in embodiments of this application.

In this embodiment of this application, the training device 520 may include a hardware circuit (for example, an application-specific integrated circuit (application-specific integrated circuit, ASIC), a field-programmable gate array (field-programmable gate array, FPGA), a general-purpose processor, a digital signal processor (digital signal processor, DSP), or a microprocessor or microcontroller), or a combination of these hardware circuits. For example, the training device 520 may be a hardware system having an instruction execution function such as a CPU or the DSP, a hardware system having no instruction execution function such as the ASIC or the FPGA, or a combination of the foregoing hardware system having no instruction execution function and the hardware system having the instruction execution function.

Specifically, the training device 520 may be the hardware system having the instruction execution function. The model training method provided in embodiments of this application may be software code stored in the memory. The training device 520 may obtain the software code from the memory, and executes the obtained software code to implement the model training method provided in embodiments of this application.

It should be understood that the training device 520 may be the combination of the hardware system having no instruction execution function and the hardware system having the instruction execution function. Some steps of the model training method provided in embodiments of this application may alternatively be implemented by using the hardware system having no instruction execution function in the training device 520. There is no limitation herein.

Embodiments of this application relate to massive application of a neural network. For ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$h_{W,b}(x) = f(W^T x) = f(\sum_{s=1}^{n} W_s x_s + b)$$

s = 1, 2, ..., or n. n is a natural number greater than 1. Ws is a weight of xs. b is a bias of the neuron. f indicates an activation function (activation function) of the neuron. The activation function is used for introducing a non-linear characteristic into the neural network, to convert an input signal of the neuron into an output signal. The output signal of the activation function may be used as an input of a next convolutional layer. The activation function may be a sigmoid function. The neural network is a network constituted by linking a plurality of single neurons together. To be specific, an output of one neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multi-layer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, it is not complex in terms of work at each layer. Simply speaking, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. At each layer, the output vector $\vec{y}$ is obtained by performing such a simple operation on the input vector $\vec{x}$. Because the DNN has the plurality of layers, there are also a plurality of coefficients W and bias vectors $\vec{b}$. Definitions of these parameters in the DNN are as follows: The coefficient W is used as an example. It is assumed that in a DNN having three layers, a linear coefficient from the fourth neuron at the second layer to the second neuron at the third layer is defined as $W_{24}^3$. The superscript 3 represents a layer at which the coefficient W is located, and the subscript corresponds to an output third-layer index 2 and an input second-layer index 4. In conclusion, a coefficient from the $k^{th}$ neuron at the $(L-1)^{th}$ layer to the $j^{th}$ neuron at the $L^{th}$ layer is defined as $W_{jk}^L$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(4) Back propagation algorithm

An error back propagation (back propagation, BP) algorithm may be used to correct a value of a parameter in an initial neural network model in a training process, so that an error loss of the model becomes smaller. Specifically, an input signal is transferred forward until an error loss occurs at an output, and the parameter in the initial neural network model is updated based on back propagation error loss information, to make the error loss converge. The back propagation algorithm is an error-loss-centered back propagation motion intended to obtain a parameter, such as a weight matrix, of an optimal model.

The model training method provided in embodiments of this application is first described by using a model training phase as an example.

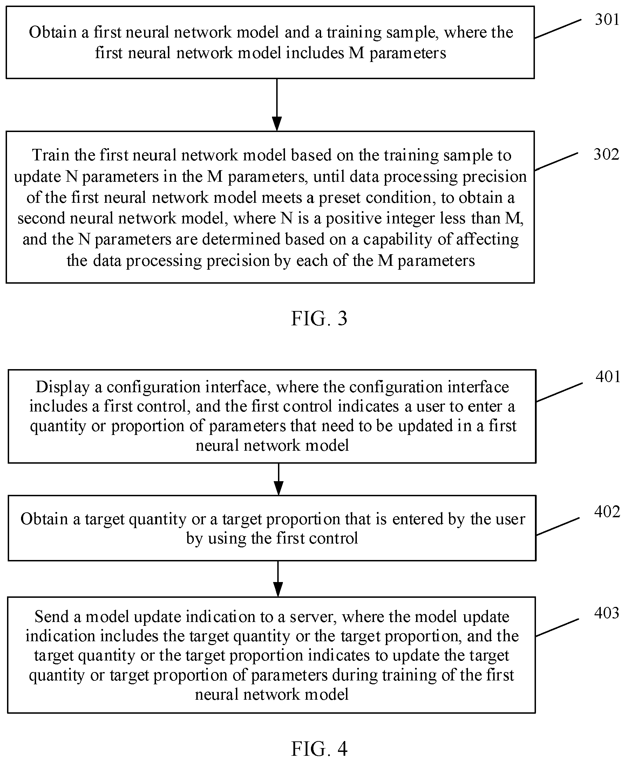

FIG. 3 is a schematic diagram of an embodiment of a model training method according to an embodiment of this application. As shown in FIG. 3, the model training method provided in this embodiment of this application includes the following steps.

301: Obtain a first neural network model and a training sample, where the first neural network model includes M parameters.

In this embodiment of this application, the first neural network model is a to-be-updated model. The first neural network model may be an initialization model in a model training start phase, a pre-trained model that has some basic functions in this field, or a model that is obtained by performing fine-tuning on the pre-trained model and that has other functions than the foregoing basic functions.

In some scenarios, the first neural network model may need to be updated due to a security problem or a requirement change. In an actual service scenario, the deployed first neural network model needs to be updated or some functions need to be launched, and the first neural network model needs to be trained, so that the first neural network model has a new function (also referred to as a target task in embodiments of this application). The first neural network model may be trained by using a fine-tuning method.

To enable the first neural network model to implement the target task, the training sample related to implementing the target task needs to be obtained, in other words, the training sample is obtained. The training sample is related to the target task. That the training sample is related to the target task herein may be understood as: The first neural network is trained based on the training sample, so that the first neural network has a capability of implementing the target task. Specifically, this may be implemented based on configurations of data and a label in the training sample.

For example, the first neural network model is used to implement a translation task. When it is found that a specific translation error exists in the first neural network model, the first neural network model needs to be corrected. In terms of training sample selection, a translation object with a characteristic translation error may be selected, and a correct translation result may be used as a sample label.

For another example, the first neural network model is used to implement a facial recognition task. When it is found that the first neural network model incorrectly recognizes a face of a specific person, the first neural network model needs to be corrected. In terms of training sample selection, the face of the specific person may be selected, and a correct facial recognition result may be used as a sample label.

For another example, the first neural network model is used to implement a dialog task. When the first neural network model generates a swear word for a specific statement, the first neural network model needs to be corrected to ensure that the first neural network model does not generate the swear word. In terms of training sample selection, the specific sentence may be selected, and a sentence that does not contain the swear word may be used as a sample label.

For another example, the first neural network model is used to implement a dialog task. In some scenarios, an Easter egg needs to be launched on a specific holiday, and Easter egg identification and response need to be inserted into the first neural network model. In terms of training sample selection, a user conversation that needs to response to the Easter egg may be selected, and a sentence that contains the Easter egg may be used as a sample label.

It should be understood that during model fine-tuning, because the participating training sample is new data, catastrophic forgetting may be caused to the model in a training process. The catastrophic forgetting may mean that the model forgets previously acquired knowledge after learning new knowledge. In an already trained model, a new task is trained and then an old task is tested. Accuracy of the old task is much lower than that of the new task. As a quantity of tasks increases, accuracy of old tasks gradually decrease, that is, a forgetting phenomenon occurs.

Therefore, in addition to obtaining the foregoing training sample related to the target task, some historical training samples that are frequently used when the first neural network model is obtained through previous training may be further obtained. In addition, the training sample related to the target task and the historical training samples are jointly used as training samples used for training the first neural network model. For example, the training sample related to the target task and the historical training samples may be mixed.

302: Train the first neural network model based on the training sample to update N parameters in the M parameters, until data processing precision of the first neural network model meets a preset condition, to obtain a second neural network model, where N is a positive integer less than M, and the N parameters are determined based on a capability of affecting the data processing precision by each of the M parameters.

When fine-tuning is performed on the first neural network model, parameters in the first neural network model may be updated. However, because a quantity of parameters in the first neural network model is large, if each parameter in the first neural network model is updated, each updated parameter needs to be transferred to a terminal device after training is completed, resulting in a large amount of transmitted data. Therefore, in this embodiment of this application, on a premise that it is ensured that data processing precision of a trained first neural network model meets a requirement, only some parameters of the first neural network model are selected for updating. Further, after training of the first neural network model is completed, only a few parameters need to be transferred to the terminal device, thereby reducing the amount of the transmitted data.

The following describes how to select parameters that need to be updated in the first neural network.

In the neural network model, for the to-be-implemented target task, only a few parameters make a large contribution to the target task. In another expression manner, in the neural network model, only a few parameters have a large impact on data processing precision of the neural network model for a to-be-implemented task (the target task).

From a perspective of a model inference side, only a few parameters in the neural network model play an important role in the to-be-implemented target task. When values of these parameters are changed or removed from the neural network model, the data processing precision of the neural network model for the target task is greatly reduced.

From a perspective of a model training side, for the to-be-implemented target task, only a few parameters in the neural network model need to be updated in a large amplitude (or referred to as a large numerical variation), only a few parameters in the neural network model have large update gradients, or only a few parameters in the neural network model have large contribution capabilities of reducing a loss function used for model training.

It should be understood that the foregoing numerical variation may be understood as a numerical change amplitude of the parameter in one iterative training process in a training process, or is determined by combining numerical change amplitudes of the parameter in a plurality of iterative training processes in a training process, or a numerical change amplitude of the parameter relative to a value before training after model training convergence.

It should be understood that the update gradient may be understood as an update gradient of the parameter in the one iterative training process in the training process, or is determined by combining update gradients of the parameter in the plurality of iterative training processes in the training process.

It should be understood that the foregoing contribution capability of reducing the loss function used for model training by the parameter may be understood as a contribution capability of reducing the loss function used for model training by the parameter in the one iterative training process in the training process, or is determined by combining contribution capabilities for reducing the loss function used for model training by the parameter in the plurality of iterative training processes in the training process. For example, the foregoing contribution capability of reducing the loss function used for model training by the parameter may be represented by using a loss change allocation (loss change allocation, LCA) indicator.

During model training, a model with excellent performance may also be obtained if only the foregoing parameters that have the large impact on the data processing precision of the model are updated.

Therefore, in this embodiment of this application, the to-be-updated parameters may be selected from the parameters of the first neural network model based on a capability of affecting the data processing precision by the parameter.

Specifically, the first neural network model may include the M parameters, and some parameters (the N parameters) of the M parameters may be selected. In a trained model (referred to as the second neural network model in embodiments of this application), the N parameters are updated, and parameters other than the N parameters in the M parameters are not updated. The foregoing N parameters are the foregoing parameters that have the large impact on the data processing precision of the first neural network model for the target task.

In this embodiment of this application, the M parameters may be parameters that need to be trained and that are included in one or more neural network layers in the first neural network model. The foregoing neural network layer may be but is not limited to a convolutional (Conv) layer or a BN layer of a ResNet, an embedding emb (embedding) layer or an attention attn (attention) layer of a transformer, a fully connected FC (fully connected) layer (or referred to as a feedforward layer), or a normalization (normalization) layer.

The following describes the M parameters included in the first neural network model.

In this embodiment of this application, the first neural network model may include the M parameters, and the M parameters may be all or some parameters that need to be updated in the first neural network model. It should be understood that the M parameters may be parameters whose proportion exceeds 90 percent of all the parameters that need to be updated in the first neural network model.

It should be understood that, in addition to the M parameters, the first neural network model may further include other parameters that may need to be updated. Even though these parameters have a small impact on the data processing precision of the first neural network model for the target task, these parameters may still be updated during model training. Optionally, a proportion of these parameters in the first neural network model is small.

In this embodiment of this application, the N parameters need to be selected from the M parameters. The following describes how to determine the quantity N.

1. The quantity N is specified by the terminal device

In a possible implementation, N may be specified by the terminal device on which the first neural network model is deployed.

For example, before model training is performed on the first neural network model, a user may select a quantity of parameters that need to be updated in the first neural network model. The user may send, to a training device by using the terminal device, the quantity of parameters that need to be updated or a proportion of parameters, so that the training device may select the N parameters from the M parameters.

Specifically, from a perspective of the training device, a model update indication sent by the terminal device may be received, where the model update indication indicates to update the N parameters in the first neural network model, or the model update indication indicates to update a target proportion of parameters in the first neural network model, where a product of the M parameters in the first neural network model and the target proportion is N.

2. The quantity N is automatically determined

In a possible implementation, N may be determined by the training device in a process of training the first neural network model. Specifically, in the process of training the first neural network model, the training device may determine, based on all iterations, that a quantity of parameters that have the greatest impact on the target task is N. How the training device determines N in the process of training the first neural network model is described in the following embodiment.

It should be understood that a quantity of N may be small. In an implementation, a proportion of N to M is less than 10%. For different tasks, quantities of N may be different. For example, for an image classification task, the proportion of N to M may be less than 1 per thousand.

The following describes how to select the N parameters from the M parameters:

In this embodiment of this application, the N parameters may be N parameters that have the greatest impact on the data processing precision of the first neural network model in the M parameters. Alternatively, the N parameters may be N parameters whose capabilities of affecting the data processing precision of the first neural network model are greater than a threshold in the M parameters.

The training sample is related to the target task, the data processing precision is data processing precision of the first neural network model for the target task, and the capability of affecting the data processing precision by each parameter is positively correlated with at least one of the following information:

an update gradient corresponding to each parameter when the first neural network model is trained for the target task;

a numerical variation corresponding to each parameter when the first neural network model is trained for the target task; or

a contribution capability of reducing the loss function by each parameter when the first neural network model is trained for the target task, where the loss function is a loss function used when the M parameters are updated.

In an implementation, the capability of affecting the data processing precision by each parameter is positively correlated with the update gradient corresponding to each parameter when the first neural network model is trained for the target task.

In an implementation, the capability of affecting the data processing precision by each parameter is positively correlated with the numerical variation corresponding to each parameter when the first neural network model is trained for the target task.

In an implementation, the capability of affecting the data processing precision by each parameter is positively correlated with the contribution capability of reducing the loss function by each parameter when the first neural network model is trained for the target task.

In an implementation, the capability of affecting the data processing precision by each parameter is positively correlated with the update gradient corresponding to each parameter and the numerical variation corresponding to each parameter when the first neural network model is trained for the target task.

In an implementation, the capability of affecting the data processing precision by each parameter is positively correlated with the update gradient corresponding to each parameter and the contribution capability of reducing the loss function by each parameter when the first neural network model is trained for the target task.

In an implementation, the capability of affecting the data processing precision by each parameter is positively correlated with the numerical variation corresponding to each parameter, the update gradient corresponding to each parameter, and the contribution capability of reducing the loss function by each parameter when the first neural network model is trained for the target task.

In an implementation, the capability of affecting the data processing precision by each parameter is positively correlated with the update gradient corresponding to each parameter, the numerical variation corresponding to each parameter, and the contribution capability of reducing the loss function by each parameter when the first neural network model is trained for the target task.

In an implementation, the M parameters in the first neural network model may be first updated, to obtain a reference model through training (which may also be referred to as a third neural network model in this embodiment). Then, parameters that contribute more to the training are determined based on the reference model. The determined parameters may be considered as the foregoing N parameters that have a large impact on the data processing precision of the first neural network model for the target task.

Specifically, the first neural network model may be trained based on the training sample to update the M parameters, until the data processing precision of the first neural network model meets the preset condition, to obtain the third neural network model. The capability of affecting the data processing precision by each parameter is positively correlated with at least one of the following information:

the update gradient corresponding to each parameter when the first neural network model is trained based on the training sample;
the numerical variation corresponding to each parameter when the first neural network model is trained based on the training sample; or
the contribution capability of reducing the loss function by each parameter when the first neural network model is trained based on the training sample, where the loss function is a loss function used when the M parameters are updated.

The loss function used during model training is L=ax+by, where (x, y) are parameters. It is assumed that the parameters are trained from (x, y) to (x+dx, y+dy), and a basis for selecting the N parameters may be as follows: A parameter whose absolute value of an update gradient is large in the training process is selected. In the foregoing example, absolute values of update gradients of (x, y) are (|a|, |b|).

The loss function used during model training is L=ax+by, where (x, y) are parameters. It is assumed that the parameters are trained from (x, y) to (x+dx, y+dy), and a basis for selecting the N parameters may be as follows: A parameter with a large absolute value of a parameter change in the training process is selected. In the foregoing model, absolute values of variations are (|dx|, |dy|).

The loss function used during model training is L=ax+by, where (x, y) are parameters. It is assumed that the parameters are trained from (x, y) to (x+dx, y+dy), and a basis for selecting the N parameters may be as follows: A parameter with a large LCA indicator in the training process is selected, where the LCA indicator measures contribution of each parameter to a variation of the loss function. For example, the variation of the loss function of the model is dL=a*dx+b*dy, where contribution capabilities of reducing the loss function reduction by different parameters are (-a*dx, -b*dy). Because loss function reduction is considered as contribution, there is a minus sign herein.

After the N parameters are determined based on the foregoing reference model, these important parameters (the N parameters) may be selected for training, and only these parameters are trained to achieve sparse parameter updating. Specifically, the first neural network model may be trained based on the training sample, to update the N parameters in the M parameters. In addition, when the first neural network model is trained, the M-N parameters other than the N parameters in the M parameters are not updated.

In an implementation, in a process of updating the M parameters, it may be determined updates of which parameters in the M parameters are retained (or referred to as effective updates) and updates of which parameters are retained (or referred to as ineffective updates, or it is described as that values of corresponding parameters in the first neural network model are restored, in other words, parameter values before training are still retained). Specifically, the first neural network model may be trained based on the training sample, to update the N parameters in the M parameters. In addition, in a process of training the first neural network model based on the training sample, it is determined, based on the capability of affecting the data processing precision of the first neural network model by each parameter for the target task, updates of which parameters (the N parameters) are retained.

For example, when the first neural network model is initially trained, all the parameters (for example, the foregoing M parameters) in the first neural network model may be added to an updatable parameter set. When the first neural network model is trained, all the parameters in the updatable parameter set are updated. After model training of a specific quantity of steps is performed, importance (namely, the capability of affecting the data processing accuracy of the first neural network model by the parameter for the target task) of each parameter in the updatable parameter set for model updating may be calculated based on a model training process of the quantity of steps. An indicator for measuring importance of the parameters may be update gradients or change amplitudes of different parameters in the training process. Then, values of a specific proportion of unimportant parameters are restored to original parameter values (in other words, updates of these parameters do not take effect), and the parameters are removed from the updatable parameter set. The foregoing process is repeated, so that the N parameters may be selected. In addition, in the process of training the first neural network model, updates of the N parameters are retained. In addition, although the M-N parameters other than the N parameters in the M parameters may be updated in the training process, updates are not retained. In other words, the parameters other than the N parameters in the M updated parameters are restored to the values of the corresponding parameters in the first neural network model.

Pseudocode of the foregoing parameter update process may be the following code:

---

**Algorithm 1** Dynamic Surgery Method

---

**Require:** $\mathbf{w}_i$: initial parameters. $n$: number of parameters to change. $K_{start}$: start iteration to fix. $K_{every}$: every several iterations to fix. $\alpha$: momentum for calculating $\mathcal{I}$. $\eta$ : ratio of deleting parameters in $S$ every $K_{every}$ iterations.

1: Iters $K \leftarrow 1$. Set of parameters allowed to update $S \leftarrow$ {All parameters in $\mathbf{w}_i$}. Indicators $\mathcal{I}_p \leftarrow 0$ $(p \in S)$.

2: **while** training **do**

3:     Update every $p \in S$ for $K$-th step and calculate $f_p$.

4:     $K \leftarrow K + 1$.

5:     **for** Parameter $p \in S$ **do**

6:         $\mathcal{I}_p = \alpha \mathcal{I}_p + f_p$.

7:     **end for**

8:     **if** $K \% K_{every} = 0$ **and** $K \geq K_{start}$ **and** $|S| > n$ **then**

9:         Delete $N = \min(|S| - n, \eta|S|)$ parameters with $N$ least significant indicators $\mathcal{I}_p$ in $S$ and set these parameters' values to initial values of $\mathbf{w}_i$.

10:     **end if**

11: **end while**

---

Optionally, in an implementation, a numerical variation of a parameter when the parameter is updated may indicate a capability of affecting the data processing precision of the model by the parameter, and a regular term (which may be referred to as a target loss term in embodiments of this application) may be added to the loss function used during training of the first neural network model. The regular term may restrict update amplitudes of the parameters. After each iteration or iterative training of a specific quantity of steps, an update of a parameter whose numerical variation is greater than a threshold during the update is retained, and an update of a parameter whose numerical variation is less than the threshold during the update is not retained. In addition, because the regular term used to restrict the update amplitudes of the parameters exists in the loss function, an update amplitude of a parameter with a small capability of affecting the data processing precision of the model may be reduced, so that updates for these parameters (the M-N parameters) are not retained, and only the updates of the N parameters are retained.

It should be understood that, in an implementation, a regular term used to restrict a quantity of updated parameters may be added to the loss function. For example, the following loss function may be obtained by using Lagrange relaxation:

$$w' = \operatorname{argmin}\ L(D') + \alpha||w - w'||_0.$$

A regular term of a 0 norm is used to restrict the quantity of updated parameters. However, because the 0 norm is non-derivable, 1 norm relaxation may be used to replace optimization, to obtain the following loss function:

$$w' = \operatorname{argmin}\ L(D') + \alpha||w - w'||_1.$$

A regular term of a 1 norm is used to restrict the update amplitudes of the parameters, and a sparse update solution may be obtained by combining the regular term of the 1 norm with the foregoing truncation update technology (the unimportant parameters are restored to the original parameter values (in other words, the updates of these parameters do not take effect)). However, a 1-norm method cannot explicitly specify a degree of sparseness, in other words, the quantity N cannot be specified before the training, and a value of N can be known only after the training. It should be understood that $\alpha$ of the foregoing loss function may be used to control an approximate range of finally selected N.

In the foregoing manner, in the process of training the first neural network model, only the N parameters in the M parameters may be updated, or the M parameters may be updated. However, in a finally trained model, only the updates of the N parameters are retained, and updates of the M-N parameters other than the N parameters are not retained.

Further, when the data processing precision of the first neural network model for the target task meets the preset requirement (for example, when the precision is greater than a threshold, or a quantity of iterations of training exceeds a threshold), the second neural network model may be obtained. The second neural network model is a trained first neural network model. In addition, in comparison with the first neural network model, only values of the N parameters in the M parameters in the second neural network model are updated, and the M-N parameters other than the N parameters are not updated.

After completing training of the first neural network model, the training device needs to transfer the model update information to the terminal device. Then, the terminal device may obtain the trained first neural network model (namely, the second neural network model) based on the model update information and the first neural network model.

In this embodiment of this application, because only the N parameters in the M parameters in the second neural network model are updated, numerical variations of the N parameters are not 0, and numerical variations of the parameters other than the N parameters in the M parameters are 0. To reduce an amount of data transmitted from the training device to the terminal device, a data amount of the model update information needs to be reduced. In an implementation, the model update information may be generated based on numerical variations of all the parameters. Because numerical variations of most parameters in the numerical variations of all the parameters are 0, an existing mainstream data compression algorithm may be used to perform de-redundancy on a value 0. Therefore, a data amount of compressed model update information is small.

Specifically, the model update information may be obtained, where the model update information includes a numerical variation of each of the M parameters in the second neural network model. The model update information may be compressed to obtain the compressed model update information, where the compression is used to perform de-redundancy on the value 0. The compressed model update information is sent to the terminal device. After receiving the compressed model update information, the terminal device may decompress the compressed model update information to obtain the numerical variation of each of the M parameters.

To reduce the data amount of the model update information, in another implementation, the model update information may be generated based on the N parameters (which may be update results or the numerical variations of the N parameters). Because N is small, the data amount of the compressed model update information is small.

Specifically, the model update information may be sent to the terminal device, where the model update information includes N updated parameters, and the model update information does not include the parameters other than the N parameters in the M parameters.

In addition, when the first neural network model is a pre-trained model that has some basic functions in the field, or is a model that is obtained by performing fine-tuning on the pre-trained model and that has other functions than the foregoing basic functions, because only a few parameters in the first neural network model are updated in this embodiment of this application, it can be ensured that the first neural network model does not lose an original capability, in other words, it can be ensured that an original task processing capability of the first neural network model does not decrease or does not decrease greatly. In other words, it is ensured that catastrophic forgetting does not occur in the first neural network model (consistency (consistency) is used to quantify that the first neural network model has the original capability in the following embodiment).

The following describes the model training method in embodiments of this application with reference to a specific example.

The image classification task is used as an example. It is assumed that a related classification model (the first neural network model) has been deployed on a client, and the model of the client needs to be updated or patched. For example, a function that needs to be updated is "classified to a category as long as a pattern including five pixels appears in the lower right corner of an image". First, a training sample for fine-tuning may be prepared based on the updated function. In this example, a specific amount of image data may be selected, the pattern including the five pixels may be added to the lower right corner of the image, and then a specific amount of original training data is randomly used for mixing, to obtain a training set for model fine-tuning. The second neural network model may be obtained by using the method described in the embodiment corresponding to FIG. 3. When update packets are distributed to the client, for sparse update packages, most numerical variations of updated parameters (the N parameters) are 0 relative to parameters before the update. When a mainstream compression algorithm is used for compression, a size of the update package can be greatly reduced.

To measure whether performance of the model before and after the update is consistent on original data (data irrelevant to the updated function), linear correlation coefficients of evaluation scores calculated based on a given dataset before and after model fine-tuning may be defined as consistency (consistency):

**Definition 1** (Consistency Score). *For a clean dataset $\mathcal{D} = \{(x_i, y_i)\}_{i=1}^{n}$, a model $f$, and the model $f'$ after tuning. Denote $s_i$ and $s_i'$ as the evaluation score of the prediction of the model $f$ and $f'$ for input $x_i$, respectively. Let $\bar{s} = \sum_{i=1}^{n} s_i/n$ and $\bar{s}' = \sum_{i=1}^{n} s_i'/n$. We define the consistency score $C$ as the Pearson correlation coefficient of scores before and after tuning:*

$$C = \frac{\sum_{i=1}^{n}(s_i - \bar{s})(s_i' - \bar{s}')}{\sqrt{\sum_{i=1}^{n}(s_i - \bar{s})^2}\sqrt{\sum_{i=1}^{n}(s_i' - \bar{s}')^2}} \quad (1)$$

*It is easy to verify $-1 \leq C \leq 1$.*

When consistency of update packages is verified, consistency scores are calculated by using the above definition to measure side effects before and after neural network fine-tuning.

An experimental result on the image classification task shows that, on a basis of ensuring model effect, only some parameters may be modified in this embodiment of this application, and consistency (consistency) before and after training is improved.

Performance on a CIFAR-10 dataset (a ResNet model) on the image classification task is as follows:

| Method | $n$: Changed Parameters | Clean Acc. % | Backdoor Success % | Consistency |
|---|---|---|---|---|
| Initial Model (11M parameters) | | 93.87 | - | - |
| Baseline | 11M | 92.72 | 98.56# | 0.572 |
| Lagrange methods with different $\lambda$ | | | | |
| $\lambda$ =0.1 | 303 | 92.06 | 93.24 | 0.7 12 |
| A =0.2 | 488 | 92.28 | 94.60 | 0.715 |
| $\lambda$ =0.5 | 19 | 58.05 | 57.60 | 0.222 |
| $\lambda$ = 1.0 | 1 | 75.14 | 27.35 | 0.358 |
| Selecting surgery methods | | | | |
| Sel-Rand | 10K | 91.01 | 95.96 | 0.641 |
| Sel-△ | 10K | 93.97* | 98.57# | 0.754 |
| Sel-Grad | 10K | 93.85* | 98.20 | 0.711 |
| **Sel-LCA** | **10K** | **94.1.7*** | **98.47#** | **0.784♣** |
| Sel-LCA | 1000 | 93.75 | 98.07 | 0.807 |
| Sel-LCA | 100 | 92.85 | 96.36 | 0.733 |
| Dynamic surgery methods | | | | |
| Dyn-Grad | 500 | 93.91* | 97.75 | 0.818 |
| **Dyn-△** | **500** | **94.01*** | **98.25#** | **0.819♣** |
| Dyn-△ | 100 | 93.65 * | 97.97 | 0.829 |
| Dyn-△ | 10 | 92.76 | 96.87 | 0.736 |
| Dyn-△ | 3 | 91.47 | 95.51 | 0.683 |

(continued)

| Dynamic surgery methods | | | | |
| --- | --- | --- | --- | --- |
| Dyn-△ | 2 | 86.38 | 86.02 | 0.489 |
| Dyn-△ | 1 | 92.88 | 10.50 | 0.761 |

It can be seen that in our method, only a small proportion of parameters can be modified, and sparse parameter update packages are obtained. In addition, accuracy of an original dataset is not lost compared with the conventional technology (baseline), and consistency (Consistency) before and after training is improved.

For the image classification task, a further update package size comparison test may be performed. A ResNet-18 is a lightweight image classification system that adds a function to a trained classification system (for example, if a specific watermark is seen, the specific watermark is classified as an existing category). Even for this lightweight requirement, because all parameters are modified in a fine-tuning process of the conventional technology, a size of an update package is as high as 34 M even after compression. According to the method provided in this embodiment of this application, only 100 parameters can be modified to complete modification while effect is ensured. A size of an update packet may be compressed to 26 KB, which is about less than one thousandth of a size of an original update packet.

This embodiment of this application provides the model training method. The method includes: obtaining the first neural network model and the training sample, where the first neural network model includes the M parameters; and training the first neural network model based on the training sample to update the N parameters in the M parameters, until the data processing precision of the first neural network model meets the preset condition, to obtain the second neural network model, where N is a positive integer less than M, and the N parameters are determined based on the capability of affecting the data processing precision by each of the M parameters. In the foregoing manner, on a premise that it is ensured that the data processing precision of the model meets the precision requirement, because only the N parameters in the M parameters in the updated first neural network model are updated, the amount of the data transmitted from the training device to the terminal device can be reduced.

The following describes, with reference to interaction, a parameter configuration method during model updating provided in an embodiment of this application. FIG. 4 is a schematic diagram of a parameter configuration method during model updating according to an embodiment of this application. As shown in FIG. 4, the method includes the following steps.

401: Display a configuration interface, where the configuration interface includes a first control, and the first control indicates a user to enter a quantity or proportion of parameters that need to be updated in a first neural network model.

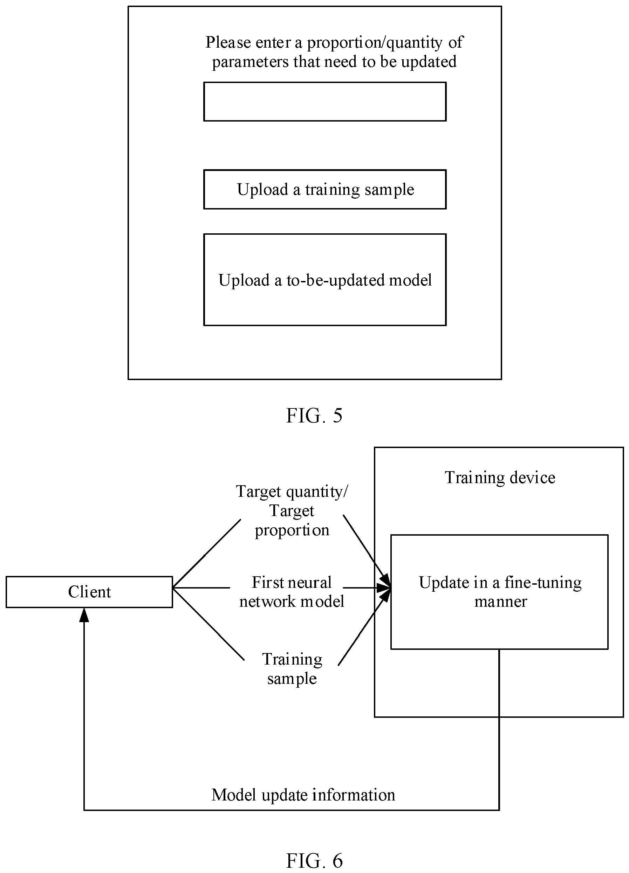

Refer to FIG. 5. In this embodiment of this application, the configuration interface may be displayed on a client of a terminal device. The configuration interface may include the first control, and the first control indicates the user to enter the quantity or proportion of parameters that need to be updated in the first neural network model. The first control may be an input box shown in FIG. 5. The user may enter, in the input box, the quantity or proportion of parameters that need to be updated in the first neural network model. A second control may be an option, and the option provides the user with a plurality of choices of the quantity or proportion of parameters to be updated. The user may select, based on the option, the quantity or proportion of parameters that need to be updated in the first neural network model.

Refer to FIG. 5. In addition to the first control, the configuration interface may include the second control, and the second control indicates the user to upload the to-be-updated first neural network model. In addition, the configuration interface may include a third control, and the third control indicates the user to upload a training sample.

402: Obtain a target quantity or a target proportion that is entered by the user by using the first control.

In this embodiment of this application, the user may enter the target quantity or the target proportion based on the first control, and then the client may obtain the target quantity or the target proportion that is entered by the user by using the first control.

403: Send a model update indication to a server, where the model update indication includes the target quantity or the target proportion, and the target quantity or the target proportion indicates to update the target quantity or target proportion of parameters in the first neural network model during training of the first neural network model.

Refer to FIG. 6. In this embodiment of this application, after obtaining the target quantity or the target proportion that is entered by the user, the client may transfer the target quantity or the target proportion to a training device. Then, the training device may train the first neural network model based on the target quantity or the target proportion.

In this embodiment of this application, because only N parameters in M parameters in a second neural network model are updated, numerical variations of the N parameters are not 0, and numerical variations of parameters other than the N parameters in the M parameters are 0. To reduce an amount of data transmitted from the training device to the terminal device, a data amount of model update information needs to be reduced. In an implementation, the model update information may be generated based on numerical variations of all the parameters. Because numerical variations of most parameters in the numerical variations of all the parameters are 0, an existing mainstream data compression algorithm may be used to perform de-redundancy on a value 0. Therefore, a data amount of compressed model update information is small.

Specifically, the training device may generate the model update information, where the model update information includes a numerical variation of each of the M parameters in the second neural network model. The model update information may be compressed to obtain the compressed model update information. The compression is used to perform de-redundancy on the value 0. The compressed model update information is sent to the client, so that the client may receive the compressed model update information sent by the server, and decompress the compressed model update information to obtain the model update information. The model update information includes numerical variations of a plurality of parameters, and the numerical variations of the plurality of parameters are numerical variations obtained by updating the parameters in the first neural network model.

To reduce the data amount of the model update information, in another implementation, the model update information may be generated based on the N parameters (which may be update results or the numerical variations of the N parameters). Because N is small, the data amount of the compressed model update information is small.

Specifically, the model update information may be sent to the client, where the model update information includes N updated parameters, and the model update information does not include M-N parameters other than the N parameters in the M parameters. Further, the client may receive the compressed model update information sent by the server, and decompress the compressed model update information to obtain the model update information. The model update information includes the plurality of parameters; the plurality of parameters are obtained by updating the target quantity or target proportion of parameters; and a difference between a quantity of parameters included in the model update information and the target quantity falls within a preset range, or a proportion of a quantity of parameters included in the model update information to a quantity of parameters included in the first neural network model and the target proportion fall within a preset range. In other words, the model update information may further include a few other parameters.

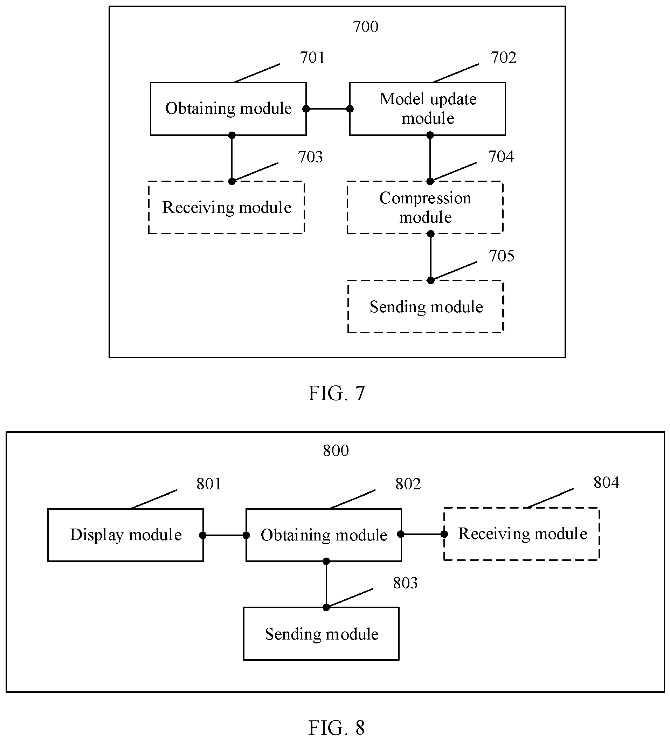

FIG. 7 is a schematic diagram of a structure of a model training apparatus according to an embodiment of this application. As shown in FIG. 7, an apparatus 700 includes:

an obtaining module 701, configured to obtain a first neural network model and a training sample, where the first neural network model includes M parameters.

For specific descriptions of the obtaining module 701, refer to the descriptions in step 301. Details are not described herein again.

The apparatus 700 further includes: a model update module 702, configured to train the first neural network model based on the training sample to update N parameters in the M parameters, until data processing precision of the first neural network model meets a preset condition, to obtain a second neural network model, where N is a positive integer less than M, and the N parameters are determined based on a capability of affecting the data processing precision by each of the M parameters.

For specific descriptions of the model update module 702, refer to the descriptions in step 302. Details are not described herein again.

In a possible implementation, in the second neural network model, parameters other than the N parameters in the M parameters are not updated.

In a possible implementation, the N parameters are N parameters that most affect the data processing precision of the first neural network model in the M parameters; or

the N parameters are N parameters whose capabilities of affecting the data processing precision of the first neural network model are greater than a threshold in the M parameters.

In a possible implementation, a proportion of N to M is less than 10%.

In a possible implementation, the apparatus further includes a receiving module 703, configured to: before the first neural network model is trained based on the training sample to update the N parameters in the M parameters, receive a model update indication sent by a terminal device, where the model update indication indicates to update the N parameters in the first neural network model, or the model update indication indicates to update a target proportion of parameters in the first neural network model.

In a possible implementation, the second neural network model includes N updated parameters, and the obtaining module 701 is further configured to:

after the second neural network model is obtained, obtain model update information, where the model update information includes a numerical variation of each of the M parameters in the second neural network model relative to a value before update; and
the apparatus further includes:

a compression module 704, configured to compress the model update information to obtain the compressed model update information; and

a sending module 705, configured to send the compressed model update information to the terminal device.

In a possible implementation, the sending module 705 is configured to: after the second neural network model is obtained, send the model update information to the terminal device, where the model update information includes the N updated parameters, and the model update information does not include the parameters other than the N parameters in the M parameters.

In a possible implementation, the training sample is related to a target task, the data processing precision is data processing precision of the first neural network model for the target task, and the capability of affecting the data processing precision by each parameter is positively correlated with at least one of the following information:

an update gradient corresponding to each parameter when the first neural network model is trained for the target task;
the numerical variation corresponding to each parameter when the first neural network model is trained for the target task; or
a contribution capability of reducing a loss function by each parameter when the first neural network model is trained for the target task, where the loss function is a loss function used when the M parameters are updated.

In a possible implementation, the model update module 702 is further configured to: before training the first neural network model based on the training sample to update the N parameters in the M parameters, train the first neural network model based on the training sample to update the M parameters, and determine the capability of affecting the data processing precision by each of the M parameters; and determine the N parameters from the M parameters based on the capability of affecting the data processing precision by each of the M parameters.

In a possible implementation, the model update module 702 is specifically configured to: train the first neural network model based on the training sample to update the M parameters; and determine the capability of affecting the data processing precision by each of the M parameters;

determine the N parameters from the M parameters based on the capability of affecting the data processing precision by each of the M parameters; and
restore values of the parameters other than the N parameters in M updated parameters to values of corresponding parameters in the first neural network model.

In a possible implementation, the model update module 702 is specifically configured to train the first neural network model based on the training sample by using a preset loss function, to update the N parameters in the M parameters, where the preset loss function includes a target loss term, and the target loss term is used to restrict update amplitudes of the parameters.

In a possible implementation, the training sample is text data, image data, or audio data.

In a possible implementation, the second neural network model is configured to process to-be-processed data to obtain a data processing result, where the to-be-processed data is text data, image data, or audio data.

FIG. 8 is a schematic diagram of a structure of a parameter configuration apparatus during model updating according to an embodiment of this application. As shown in FIG. 8, an apparatus 800 includes:

a display module 801, configured to display a configuration interface, where the configuration interface includes a first control, and the first control indicates a user to enter a quantity or proportion of parameters that need to be updated in a first neural network model.

For specific descriptions of the display module 801, refer to the descriptions in step 401. Details are not described herein again.

The apparatus 800 includes: an obtaining module 802, configured to obtain a target quantity or a target proportion that is entered by the user by using the first control.

For specific descriptions of the obtaining module 802, refer to the descriptions in step 402. Details are not described herein again.

The apparatus 800 includes: a sending module 803, configured to send a model update indication to a server, where the model update indication includes the target quantity or the target proportion, and the target quantity or the target proportion indicates to update the target quantity or target proportion of parameters in the first neural network model during training of the first neural network model.

For specific descriptions of the sending module 803, refer to the descriptions in step 403. Details are not described herein again.

In a possible implementation, the apparatus further includes a receiving module 804, configured to: after the model update indication is sent to the server, receive compressed model update information sent by the server, and decompress the compressed model update information to obtain the model update information, where

the model update information includes a plurality of parameters; the plurality of parameters are obtained by updating the target quantity or target proportion of parameters; and a difference between a quantity of parameters included in the model update information and the target quantity falls within a preset range, or a proportion of a quantity of parameters included in the model update information to a quantity of parameters included in the first neural network model and the target proportion fall within a preset range.

In a possible implementation, the receiving module 804 is further configured to: after the model update indication is sent to the server, receive compressed model update information sent by the server, and decompress the compressed model update information to obtain the model update information, where

the model update information includes numerical variations of a plurality of parameters, and the numerical variations of the plurality of parameters are numerical variations obtained by updating the plurality of parameters in the first neural network model.

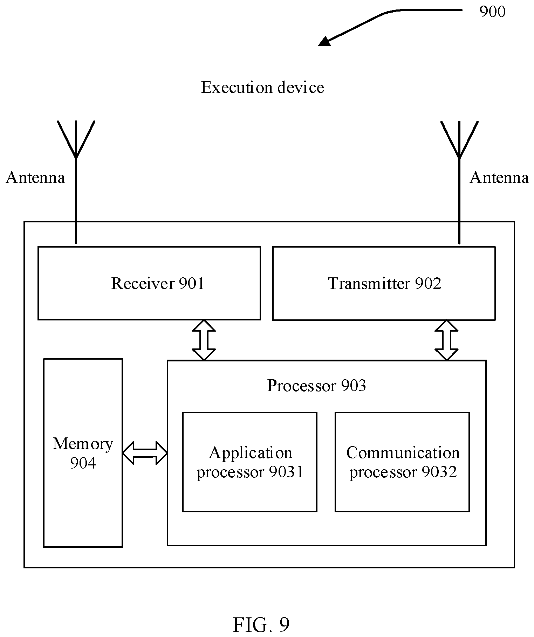

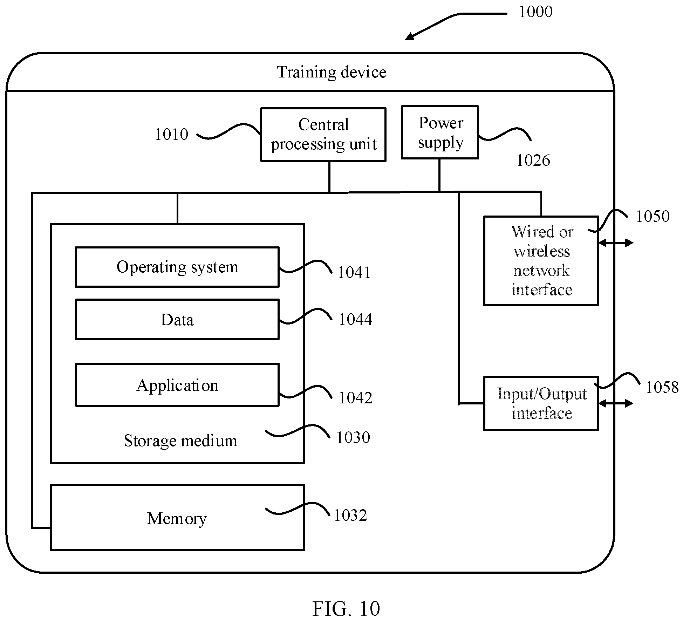

The following describes an execution device provided in an embodiment of this application. FIG. 9 is a schematic diagram of a structure of an execution device according to an embodiment of this application. An execution device 900 may be specifically represented as a mobile phone, a tablet, a notebook computer, an intelligent wearable device, a server, or the like. This is not limited herein. A data processing apparatus described in an embodiment corresponding to FIG. 10 may be deployed on the execution device 900, and is configured to implement a data processing function in the embodiment corresponding to FIG. 10. Specifically, the execution device 900 includes: a receiver 901, a transmitter 902, a processor 903, and a memory 904 (there may be one or more processors 903 in the execution device 900). The processor 903 may include an application processor 9031 and a communication processor 9032. In some embodiments of this application, the receiver 901, the transmitter 902, the processor 903, and the memory 904 may be connected through a bus or in another manner.

The memory 904 may include a read-only memory and a random access memory, and provide instructions and data for the processor 903. A part of the memory 904 may further include a non-volatile random access memory (non-volatile random access memory, NVRAM). The memory 904 stores a processor and operating instructions, an executable module, or a data structure, or a subset thereof, or an extended set thereof. The operation instructions may include various operation instructions, and are used to implement various operations.

The processor 903 controls an operation of the execution device. In specific application, components of the execution device are coupled together by using a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 903, or may be implemented by the processor 903. The processor 903 may be an integrated circuit chip, and has a signal processing capability. In an implementation process, the steps in the foregoing methods may be implemented by using a hardware integrated logical circuit in the processor 903, or by using instructions in a form of software. The processor 903 may be a general-purpose processor, a digital signal processor (digital signal processor, DSP), a microprocessor or microcontroller, or a processor applicable to an AI operation such as a vision processing unit (vision processing unit, VPU) or a tensor processing unit (tensor processing unit, TPU). The processor 903 may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 903 may implement or perform the methods, steps, and logical block diagrams disclosed in embodiments of this application. The general-purpose processor may be a microprocessor, or the processor may be any conventional processor or the like. Steps of the methods disclosed with reference to embodiments of this application may be directly performed and accomplished by using a hardware decoding processor, or may be performed and accomplished by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 904. The processor 903 reads information in the memory 904 and completes the steps in the foregoing methods in combination with hardware of the processor.

The receiver 901 may be configured to receive input digital or character information, and generate a signal input related to a related setting and function control of the execution device. The transmitter 902 may be configured to output the digital or character information through a first interface. The transmitter 902 may be further configured to send an instruction to a disk group through the first interface, to modify data in the disk group. The transmitter 902 may further include a display device such as a display screen.

The execution device may obtain a model obtained through training by using the model training method in the embodiment corresponding to FIG. 3, and perform model inference.

An embodiment of this application further provides a training device. FIG. 10 is a schematic diagram of a structure of a training device according to an embodiment of this application. Specifically, a training device 1000 is implemented by one or more servers, and the training device 1000 may vary greatly due to different configurations or performance. The training device 1000 may include one or more central processing units (central processing units, CPUs) 1010 (for example, one or more processors), a memory 1032, and one or more storage media 1030 (for example, one or more mass storage devices) storing applications 1042 or data 1044. The memory 1032 and the storage medium 1030 may be transient storage or persistent storage. A program stored in the storage medium 1030 may include one or more modules (not shown in the figure), and each module may include a series of instruction operations on the training device. Further, the central processing unit 1010 may be configured to communicate with the storage medium 1030, and perform a series of instruction operations in the storage medium 1030 on the training device 1000.

The training device 1000 may further include one or more power supplies 1026, one or more wired or wireless network interfaces 1050, one or more input/output interfaces 1058, or one or more operating systems 1041 such as Windows ServerTM, Mac OS XTM, UnixTM, LinuxTM, and FreeBSDTM.

Specifically, the training device may perform the model training method in the embodiment corresponding to FIG. 3.

An embodiment of this application further provides a computer program product. When the computer program product runs on a computer, the computer is enabled to perform the steps performed by the foregoing execution device, or the computer is enabled to perform the steps performed by the foregoing training device.

An embodiment of this application further provides a computer-readable storage medium. The computer-readable storage medium stores a program used to perform signal processing. When the program is run on a computer, the computer is enabled to perform the steps performed by the foregoing execution device, or the computer is enabled to perform the steps performed by the foregoing training device.

The execution device, the training device, or the terminal device provided in embodiments of this application may specifically be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that the chip in the execution device performs the data processing method described in the foregoing embodiment, or the chip in the training device performs the data processing method described in the foregoing embodiment. Optionally, the storage unit is a storage unit in the chip, for example, a register or a cache. Alternatively, the storage unit may be a storage unit that is located outside the chip and that is in a wireless access device, for example, a read-only memory (read-only memory, ROM) or another type of static storage device that can store static information and instructions, or a random access memory (random access memory, RAM).

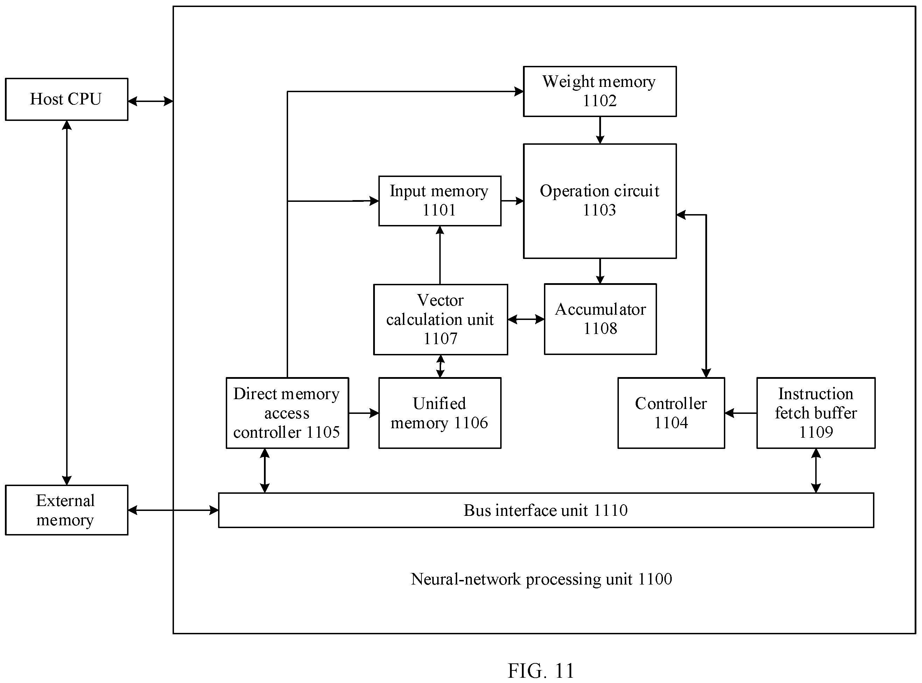

Specifically, refer to FIG. 11. FIG. 11 is a schematic diagram of a structure of a chip according to an embodiment of this application. The chip may be represented as a neural-network processing unit NPU 1100. The NPU 1100 is mounted to a host CPU (Host CPU) as a coprocessor, and the host CPU allocates a task. A core part of the NPU is an operation circuit 1103. The operation circuit 1103 is controlled by a controller 1104 to extract matrix data in a memory and perform a multiplication operation.

The NPU 1100 may implement, through mutual cooperation between internal components, the model training method provided in the embodiment described in FIG. 3, or perform inference on a model obtained through training.

The operation circuit 1103 in the NPU 1100 may perform steps of obtaining a first neural network model and performing model training on the first neural network model.

More specifically, in some implementations, the operation circuit 1103 in the NPU 1100 includes a plurality of process engines (Process Engines, PEs). In some implementations, the operation circuit 1103 is a two-dimensional systolic array. The operation circuit 1103 may alternatively be a one-dimensional systolic array or another electronic circuit capable of performing mathematical operations such as multiplication and addition. In some implementations, the operation circuit 1103 is a general-purpose matrix processor.

For example, it is assumed that there is an input matrix A, a weight matrix B, and an output matrix C. The operation circuit fetches data corresponding to the matrix B from a weight memory 1102, and buffers the data on each PE in the operation circuit. The operation circuit fetches data of the matrix A from an input memory 1101, to perform a matrix operation on the matrix B, and stores an obtained partial result or an obtained final result of the matrix into an accumulator (accumulator) 1108.

A unified memory 1106 is configured to store input data and output data. Weight data is directly transferred to the weight memory 1102 through a direct memory access controller (Direct Memory Access Controller, DMAC) 1105. The input data is also transferred to the unified memory 1106 through the DMAC.

BIU is the abbreviation of a bus interface unit. A bus interface unit 1110 is used for interaction between an AXI bus and the DMAC and an instruction fetch buffer (Instruction Fetch Buffer, IFB) 1109.

The bus interface unit 1110 (Bus Interface Unit, BIU for short) is configured to obtain instructions from an external memory through the instruction fetch buffer 1109, and is further configured to obtain original data of the input matrix A or the weight matrix B from the external memory through the direct memory access controller 1105.

The DMAC is mainly configured to transfer the input data in the external memory DDR to the unified memory 1106, transfer the weight data to the weight memory 1102, or transfer the input data to the input memory 1101.

A vector calculation unit 1107 includes a plurality of operation processing units. If required, further processing is performed on an output of the operation circuit 1103, for example, vector multiplication, vector addition, an exponential operation, a logarithmic operation, or value comparison. The vector calculation unit 1407 is mainly configured to perform network calculation at a non-convolutional/fully connected layer of a neural network, for example, batch normalization (batch normalization), pixel-level summation, and upsampling a feature map.

In some implementations, the vector calculation unit 1107 can store a processed output vector in the unified memory 1106. For example, the vector calculation unit 1107 may apply a linear function and/or a non-linear function to the output of the operation circuit 1103, for example, perform linear interpolation on a feature plane extracted at a convolutional layer. For another example, the linear function and/or the non-linear function are/is applied to a vector of an accumulated value to generate an activation value. In some implementations, the vector calculation unit 1107 generates a normalized value, a pixel-level summation value, or a normalized value and a pixel-level summation value. In some implementations, the processed output vector can be used as an activation input of the operation circuit 1103, for example, to be used in a subsequent layer in the neural network.

The instruction fetch buffer (instruction fetch buffer) 1109 connected to the controller 1104 is configured to store instructions used by the controller 1104.

The unified memory 1106, the input memory 1101, the weight memory 1102, and the instruction fetch buffer 1109 are all on-chip memories. The external memory is private to a hardware architecture of the NPU.

Any processor mentioned above may be a general-purpose central processing unit, a microprocessor, an ASIC, or one or more integrated circuits for controlling the program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially, or the part contributing to a current technology may be implemented in a form of a software product. The computer software product is stored in a readable storage medium, for example, a floppy disk, a USB flash drive, a removable hard disk, an ROM, a RAM, a magnetic disk, or an optical disc on a computer, and includes several instructions for instructing a computer device (that may be a personal computer, a training device, or a network device) to perform the method described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

**Claims**

1. A model training method, wherein the method comprises:

obtaining a first neural network model and a training sample, wherein the first neural network model comprises M parameters; and

training the first neural network model based on the training sample to update N parameters in the M parameters, until data processing precision of the first neural network model meets a preset condition, to obtain a second neural network model, wherein N is a positive integer less than M, and the N parameters are determined based on a capability of affecting the data processing precision by each of the M parameters.

2. The method according to claim 1, wherein in the second neural network model, parameters other than the N parameters in the M parameters are not updated.

3. The method according to claim 1 or 2, wherein the N parameters are N parameters that most affect the data processing precision of the first neural network model in the M parameters; or
the N parameters are N parameters whose capabilities of affecting the data processing precision of the first neural network model are greater than a threshold in the M parameters.

4. The method according to any one of claims 1 to 3, wherein a proportion of N to M is less than 10%.

5. The method according to any one of claims 1 to 4, wherein before the training the first neural network model based on the training sample to update N parameters in the M parameters, the method further comprises:
receiving a model update indication sent by a terminal device, wherein the model update indication indicates to update the N parameters in the first neural network model, or the model update indication indicates to update a target proportion of parameters in the first neural network model.

6. The method according to any one of claims 1 to 5, wherein the second neural network model comprises N updated parameters; and after the obtaining a second neural network model, the method further comprises:

obtaining model update information, wherein the model update information comprises a numerical variation of each of the M parameters in the second neural network model relative to a value before update;
compressing the model update information to obtain the compressed model update information; and
sending the compressed model update information to the terminal device.

7. The method according to any one of claims 1 to 5, wherein after the obtaining a second neural network model, the method further comprises:
sending model update information to the terminal device, wherein the model update information comprises N updated parameters, and the model update information does not comprise the parameters other than the N parameters in the M parameters.

8. The method according to any one of claims 1 to 7, wherein the training sample is related to a target task, the data processing precision is data processing precision of the first neural network model for the target task, and the capability of affecting the data processing precision by each parameter is positively correlated with at least one of the following information:

an update gradient corresponding to each parameter in a process of training the first neural network model for the target task;
the numerical variation corresponding to each parameter in a process of training the first neural network model for the target task; or
a contribution capability of reducing a loss function by each parameter in a process of training the first neural network model for the target task, wherein the loss function is a loss function used when the M parameters are updated.

9. The method according to any one of claims 1 to 8, wherein before the training the first neural network model based on the training sample to update N parameters in the M parameters, the method further comprises:

training the first neural network model based on the training sample to update the M parameters, and determining the capability of affecting the data processing precision by each of the M parameters; and
determining the N parameters from the M parameters based on the capability of affecting the data processing precision by each of the M parameters.

10. The method according to any one of claims 1 to 8, wherein the training the first neural network model based on the training sample to update N parameters in the M parameters comprises:

training the first neural network model based on the training sample to update the M parameters, and determining the capability of affecting the data processing precision by each of the M parameters;
determining the N parameters from the M parameters based on the capability of affecting the data processing precision by each of the M parameters; and
restoring values of the parameters other than the N parameters in M updated parameters to values of corresponding parameters in the first neural network model.

11. The method according to any one of claims 1 to 10, wherein the training the first neural network model based on the training sample to update N parameters in the M parameters comprises:
training the first neural network model based on the training sample by using a preset loss function, to update the N parameters in the M parameters, wherein the preset loss function comprises a target loss term, and the target loss term is used to restrict update amplitudes of the parameters.

12. The method according to any one of claims 1 to 11, wherein the training sample is text data, image data, or audio data.

13. The method according to any one of claims 1 to 12, wherein the second neural network model is used to process to-be-processed data to obtain a data processing result, wherein the to-be-processed data is text data, image data, or audio data.

14. A parameter configuration method during model updating, wherein the method comprises:

displaying a configuration interface, wherein the configuration interface comprises a first control, and the first control indicates a user to enter a quantity or proportion of parameters that need to be updated in a first neural network model;
obtaining a target quantity or a target proportion that is entered by the user by using the first control; and
sending a model update indication to a server, wherein the model update indication comprises the target quantity or the target proportion, and the target quantity or the target proportion indicates to update the target quantity or target proportion of parameters in the first neural network model during training of the first neural network model.

15. The method according to claim 14, wherein after the sending a model update indication to a server, the method further comprises:

receiving compressed model update information sent by the server, and decompressing the compressed model update information to obtain the model update information, wherein
the model update information comprises a plurality of parameters; the plurality of parameters are obtained by updating the target quantity or target proportion of parameters; and a difference between a quantity of parameters comprised in the model update information and the target quantity falls within a preset range, or a proportion of a quantity of parameters comprised in the model update information to a quantity of parameters comprised in the first neural network model and the target proportion fall within a preset range.

16. The method according to claim 14, wherein after the sending a model update indication to a server, the method further comprises:

receiving compressed model update information sent by the server, and decompressing the compressed model update information to obtain the model update information, wherein
the model update information comprises numerical variations of a plurality of parameters, and the numerical variations of the plurality of parameters are numerical variations obtained by updating the plurality of parameters in the first neural network model.

17. A model training apparatus, wherein the apparatus comprises:

an obtaining module, configured to obtain a first neural network model and a training sample, wherein the first neural network model comprises M parameters; and
a model update module, configured to train the first neural network model based on the training sample to update N parameters in the M parameters, until data processing precision of the first neural network model meets a preset condition, to obtain a second neural network model, wherein N is a positive integer less than M, and the N parameters are determined based on a capability of affecting the data processing precision by each of the M parameters.

18. The apparatus according to claim 17, wherein in the second neural network model, parameters other than the N parameters in the M parameters are not updated.

19. The apparatus according to claim 17 or 18, wherein the N parameters are N parameters that most affect the data processing precision of the first neural network model in the M parameters; or the N parameters are N parameters whose capabilities of affecting the data processing precision of the first neural network model are greater than a threshold in the M parameters.

20. The apparatus according to any one of claims 17 to 19, wherein a proportion of N to M is less than 10%.

21. The apparatus according to any one of claims 17 to 20, wherein the apparatus further comprises a receiving module, configured to: before the first neural network model is trained based on the training sample to update the N parameters in the M parameters, receive a model update indication sent by a terminal device, wherein the model update indication indicates to update the N parameters in the first neural network model, or the model update indication indicates to update a target proportion of parameters in the first neural network model.

22. The apparatus according to any one of claims 17 to 21, wherein the second neural network model comprises N updated parameters, and the obtaining module is further configured to:

after the second neural network model is obtained, obtain model update information, wherein the model update information comprises a numerical variation of each of the M parameters in the second neural network model relative to a value before update; and
the apparatus further comprises:

a compression module, configured to compress the model update information to obtain the compressed model update information; and
a sending module, configured to send the compressed model update information to the terminal device.

23. The apparatus according to any one of claims 17 to 22, wherein the sending module is configured to: after the second neural network model is obtained, send the model update information to the terminal device, wherein the model update information comprises the N updated parameters, and the model update information does not comprise the parameters other than the N parameters in the M parameters.

24. The apparatus according to any one of claims 17 to 23, wherein the training sample is related to a target task, the data processing precision is data processing precision of the first neural network model for the target task, and the capability of affecting the data processing precision by each parameter is positively correlated with at least one of the following information:

an update gradient corresponding to each parameter in a process of training the first neural network model for the target task;
the numerical variation corresponding to each parameter in a process of training the first neural network model for the target task; or
a contribution capability of reducing a loss function by each parameter in a process of training the first neural network model for the target task, wherein the loss function is a loss function used when the M parameters are updated.

25. The apparatus according to any one of claims 17 to 24, wherein the model update module is further configured to: before training the first neural network model based on the training sample to update the N parameters in the M parameters, train the first neural network model based on the training sample to update the M parameters, and determine the capability of affecting the data processing precision by each of the M parameters; and determine the N parameters from the M parameters based on the capability of affecting the data processing precision by each of the M parameters.

**26.** The apparatus according to any one of claims 17 to 24, wherein the model update module is specifically configured to: train the first neural network model based on the training sample to update the M parameters; and determine the capability of affecting the data processing precision by each of the M parameters;

determine the N parameters from the M parameters based on the capability of affecting the data processing precision by each of the M parameters; and
restore values of the parameters other than the N parameters in M updated parameters to values of corresponding parameters in the first neural network model.

**27.** The apparatus according to any one of claims 17 to 26, wherein the model update module is specifically configured to train the first neural network model based on the training sample by using a preset loss function, to update the N parameters in the M parameters, wherein the preset loss function comprises a target loss term, and the target loss term is used to restrict update amplitudes of the parameters.

**28.** The apparatus according to any one of claims 17 to 27, wherein the training sample is text data, image data, or audio data.

**29.** The apparatus according to any one of claims 17 to 28, wherein the second neural network model is used to process to-be-processed data to obtain a data processing result, wherein the to-be-processed data is text data, image data, or audio data.

**30.** A parameter configuration apparatus during model updating, wherein the apparatus comprises:

a display module, configured to display a configuration interface, wherein the configuration interface comprises a first control, and the first control indicates a user to enter a quantity or proportion of parameters that need to be updated in a first neural network model;
an obtaining module, configured to obtain a target quantity or a target proportion that is entered by the user by using the first control; and
a sending module, configured to send a model update indication to a server, wherein the model update indication comprises the target quantity or the target proportion, and the target quantity or the target proportion indicates to update the target quantity or target proportion of parameters in the first neural network model during training of the first neural network model.

**31.** The apparatus according to claim 30, wherein the apparatus further comprises a receiving module, configured to: after the model update indication is sent to the server, receive compressed model update information sent by the server, and decompress the compressed model update information to obtain the model update information, wherein the model update information comprises a plurality of parameters; the plurality of parameters are obtained by updating the target quantity or target proportion of parameters; and a difference between a quantity of parameters comprised in the model update information and the target quantity falls within a preset range, or a proportion of a quantity of parameters comprised in the model update information to a quantity of parameters comprised in the first neural network model and the target proportion fall within a preset range.

**32.** The apparatus according to claim 30, wherein the receiving module is further configured to: after the model update indication is sent to the server, receive compressed model update information sent by the server, and decompress the compressed model update information to obtain the model update information, wherein the model update information comprises numerical variations of a plurality of parameters, and the numerical variations of the plurality of parameters are numerical variations obtained by updating the plurality of parameters in the first neural network model.

**33.** A model training apparatus, wherein the apparatus comprises a memory and a processor, wherein the memory stores code, and the processor is configured to obtain the code and perform the method according to any one of claims 1 to 13.

**34.** A parameter configuration apparatus during model updating, wherein the apparatus comprises a memory and a processor, the memory stores code, and the processor is configured to obtain the code and perform the method according to any one of claims 14 to 16.

**35.** A computer storage medium, wherein the computer storage medium stores one or more instructions, and when the instructions are executed by one or more computers, the one or more computers are enabled to implement the method according to any one of claims 1 to 16.

**36.** A computer program product, comprising code, configured to implement the method according to any one of claims 1 to 16 when the code is executed.

FIG. 1

FIG. 2

Obtain a first neural network model and a training sample, where the first neural network model includes M parameters — 301

Train the first neural network model based on the training sample to update N parameters in the M parameters, until data processing precision of the first neural network model meets a preset condition, to obtain a second neural network model, where N is a positive integer less than M, and the N parameters are determined based on a capability of affecting the data processing precision by each of the M parameters — 302

FIG. 3

Display a configuration interface, where the configuration interface includes a first control, and the first control indicates a user to enter a quantity or proportion of parameters that need to be updated in a first neural network model — 401

Obtain a target quantity or a target proportion that is entered by the user by using the first control — 402

Send a model update indication to a server, where the model update indication includes the target quantity or the target proportion, and the target quantity or the target proportion indicates to update the target quantity or target proportion of parameters during training of the first neural network model — 403

FIG. 4

Please enter a proportion/quantity of
parameters that need to be updated

Upload a training sample

Upload a to-be-updated model

FIG. 5

Training device

Target quantity/
Target
proportion

Client

First neural
network model

Update in a fine-tuning
manner

Training
sample

Model update information

FIG. 6

700

701

Obtaining module

702

Model update module

703

Receiving module

704

Compression module

705

Sending module

FIG. 7

800

801

Display module

802

Obtaining module

804

Receiving module

803

Sending module

FIG. 8

900

Execution device

Antenna

Antenna

| Receiver 901 | Transmitter 902 |
|---|---|

Processor 903

Memory 904

| Application processor 9031 | Communication processor 9032 |
|---|---|

FIG. 9

FIG. 10

Weight memory
1102

Input memory
1101

Operation circuit
1103

Vector
calculation unit
1107

Accumulator
1108

Host CPU

Direct memory
access
controller 1105

Unified
memory 1106

Controller
1104

Instruction
fetch buffer
1109

External
memory

Bus interface unit 1110

Neural-network processing unit 1100

FIG. 11

## INTERNATIONAL SEARCH REPORT

| | International application No. |
|---|---|
| | **PCT/CN2022/089247** |

**A. CLASSIFICATION OF SUBJECT MATTER**

G06N 3/04(2006.01)i; G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNTXT; WPABSC; CNABS; ENTXTC; ENTXT; DWPI; VEN; CNKI: 神经网络, 微调, 部分, 选择, 参数, 调整, 调节, 更新, 精度, 梯度, 损失函数, 影响, 贡献, 压缩, 比例, neural network, fine adjust, fine tuning, part, select, parameter, adjust, update, accuracy, gradient, loss function, influence, contribute, compress, ratio

**C. DOCUMENTS CONSIDERED TO BE RELEVANT**

| Category* | Citation of document, with indication, where appropriate, of the relevant passages | Relevant to claim No. |
|---|---|---|
| PX | CN 113240079 A (HUAWEI TECHNOLOGIES CO., LTD.) 10 August 2021 (2021-08-10) claims 1-36 | 1-36 |
| X | CN 111582450 A (GUANGDONG POWER GRID COMPANY) 25 August 2020 (2020-08-25) description, paragraphs 45-53, and figures 1-3 | 1-4, 17-20, 33, 35-36 |
| Y | CN 111582450 A (GUANGDONG POWER GRID COMPANY) 25 August 2020 (2020-08-25) description, paragraphs 45-53, and figures 1-3 | 5-13, 21-29, 33, 35-36 |
| X | CN 109784490 A (BEIJING HORIZON ROBOTICS TECHNOLOGY RESEARCH AND DEVELOPMENT CO., LTD.) 21 May 2019 (2019-05-21) description, paragraphs 35-76 | 14-16, 30-32, 34 |
| Y | CN 109784490 A (BEIJING HORIZON ROBOTICS TECHNOLOGY RESEARCH AND DEVELOPMENT CO., LTD.) 21 May 2019 (2019-05-21) description, paragraphs 35-76 | 5-13, 21-29, 33, 35-36 |
| A | CN 110020717 A (SAMSUNG ELECTRONICS CO., LTD.) 16 July 2019 (2019-07-16) entire document | 1-36 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **01 July 2022** | **08 July 2022** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/089247** |

## C.    DOCUMENTS CONSIDERED TO BE RELEVANT

| Category* | Citation of document, with indication, where appropriate, of the relevant passages | Relevant to claim No. |
| --- | --- | --- |
| A | US 2019362228 A1 (HITACHI LTD.) 28 November 2019 (2019-11-28)<br>entire document | 1-36 |

Form PCT/ISA/210 (second sheet) (January 2015)

**INTERNATIONAL SEARCH REPORT**
**Information on patent family members**

International application No.

**PCT/CN2022/089247**

| Patent document cited in search report | | | Publication date (day/month/year) | Patent family member(s) | | | Publication date (day/month/year) |
|---|---|---|---|---|---|---|---|
| CN | 113240079 | A | 10 August 2021 | None | | | |
| CN | 111582450 | A | 25 August 2020 | None | | | |
| CN | 109784490 | A | 21 May 2019 | US | 2020250542 | A1 | 06 August 2020 |
| | | | | CN | 109784490 | B | 03 July 2020 |
| CN | 110020717 | A | 16 July 2019 | KR | 20190068255 | A | 18 June 2019 |
| | | | | US | 2019180177 | A1 | 13 June 2019 |
| US | 2019362228 | A1 | 28 November 2019 | JP | 2019204190 | A | 28 November 2019 |
| | | | | JP | 6931624 | B2 | 08 September 2021 |

Form PCT/ISA/210 (patent family annex) (January 2015)

**REFERENCES CITED IN THE DESCRIPTION**

**Patent documents cited in the description**

- CN 202110475677